# EUROPEAN PATENT APPLICATION

(11) **EP 0 883 320 A2**
(43) Date of publication of application: **09.12.1998**
(21) Application number: 98106739.0
(22) Date of filing: 14.04.1998
(51) Int. Cl.: H04Q 9/00

(54) **Network control system, network terminal and control terminal**

(30) Priority: 14.04.1997 JP 95473/97
(71) Applicant: Matsushita Electric Industrial Co., Ltd., Kadoma-shi, Osaka 571-8501 (JP)
(72) Inventor: Hatakeyama, Takeshi, Osaka-shi, Osaka (JP); Kitao, Mitsuru, Yamamotokoriyama-shi, Nara-ken (JP); Moriguchi, Ken-ichi, Neyagawa-shi, Osaka (JP)
(74) Representative: Schwabe - Sandmair - Marx

(57) **Abstract**

A network control system is provided which includes: a network terminal; and a control terminal. The network terminal transmits to the control terminal manipulation information indicating a type of at least one manipulation component and a manipulation requesting signal corresponding to the manipulation component, receives from the control terminal the manipulation requesting signal, and performs an operation corresponding to the manipulation requesting signal upon receipt of the manipulation requesting signal from the control terminal. The control terminal includes at least one manipulation component, receives and analyzes the manipulation information from the network terminal, selects the type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal.

## Description

### BACKGROUND OF THE INVENTION

### 1. FIELD OF THE INVENTION:

The present invention relates to a control terminal, a network terminal and a network control system in which the control terminal is connected to the network terminal via a network for remotely controlling the network terminal.

### 2. DESCRIPTION OF THE RELATED ART:

It is well known that remote controllers for controlling televisions, video players, air conditioners and the like need to be manipulated separately, thereby rendering manipulations of the apparatuses complicated.

Therefore, a system for remotely controlling a plurality of unspecified network terminals with one remote controller has been proposed. According to this system, a network terminal and a control terminal are combined, whereby the network terminal provides control information to the control terminal. Based on this control information, a manipulation environment for remotely controlling the network terminal is established on the control terminal side.

Such systems are described in, for example, Japanese Laid-Open Publication Nos. 8-140167 and 8-149576. According to the above-described publications, control information including a plurality of commands and a plurality of icons corresponding thereto is stored in the network terminal. The control information is transmitted from the network terminal to the control terminal. The control terminal analyzes the control information and displays an icon for each of the manipulation buttons, thereby establishing a manipulation environment. The manipulation buttons are selectively pressed by a user referring to these icons, whereby a signal indicating a command corresponding to the selected manipulation button is transmitted from the control terminal to the network terminal. In response to the signal indicating the command, the network terminal executes the command and performs a predetermined operation.

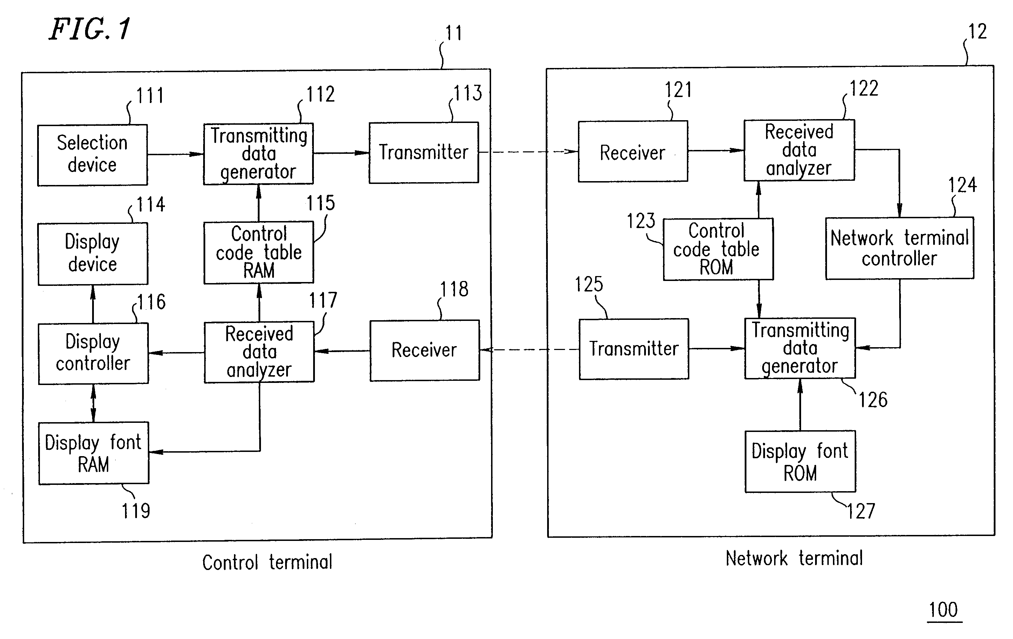

Figure **1** is a block diagram showing a conventional network control system **100**. Referring to Figure **1**, a control terminal **11** includes a selection device **111**, a transmitting data generator **112**, a transmitter **113**, a display device **114**, a control code table RAM **115**, a display controller **116**, a received data analyzer **117**, a receiver **118** and a display font RAM **119**. The network terminal **12** includes a receiver **121**, a received data analyzer **122**, a control code table ROM **123**, a network terminal controller **124**, a transmitter **125**, a transmitting data generator **126** and a display font ROM **127**.

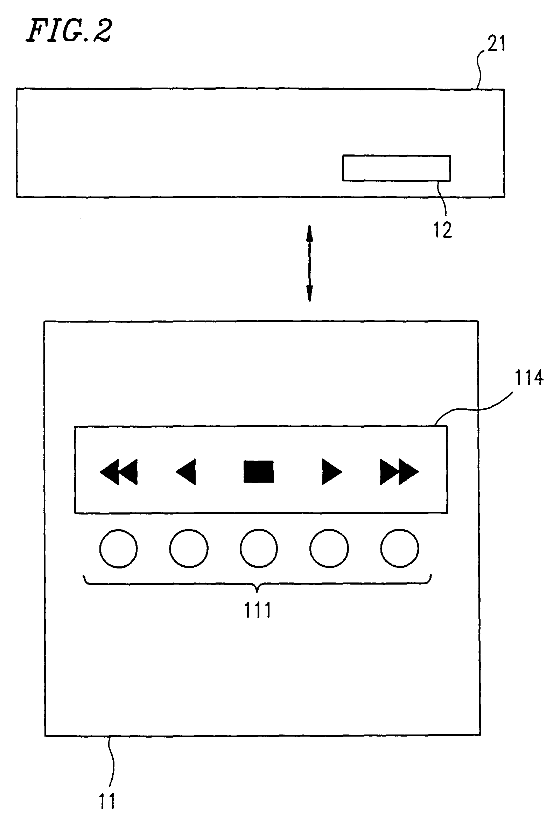

Figure **2** is a schematic diagram showing a video apparatus **21** which is provided with the network terminal **12**. Each of control information including a command and an icon corresponding thereto is transmitted from the network terminal **12** to the control terminal **11** as an infrared signal, whereby the control information is downloaded to the control terminal **11**. The control terminal **11** receives and analyzes the control information and displays five icons on the display device **114** indicating corresponding operations (i.e., rewind, reverse play, stop, play and fast forward). The selection device **111** includes a plurality of manipulation buttons. Icons corresponding to the manipulation buttons respectively are displayed. As a result, a manipulation environment for remotely controlling the video apparatus **21** is established on the control terminal **11**. For example, when a manipulation button corresponding to an icon indicating "rewind" is pressed, a signal indicating a command for rewinding is transmitted from the control terminal **11** to the network terminal **12**. In response to the signal indicating the rewind command, the network terminal **12** executes the command and instructs the video player **21** to rewind.

Hereinafter, the above-described operation will be described in more detail.

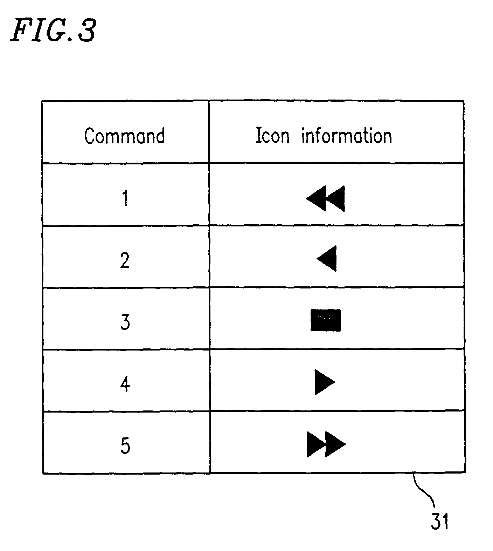

In the network terminal **12**, the commands for controlling the network terminal **12** are stored in the control code table ROM **123**. Icons corresponding to these commands are scored in the display font ROM **127**. Figure **3** is a table **31** showing examples of the commands and the icons corresponding thereto. Each command and each icon corresponding thereto form manipulation information.

The transmitting data generator **126** of the network terminal **12** fetches a command from the control code table ROM **123** as well as an icon corresponding thereto from the display font ROM **127**, thereby forming manipulation information by combining the command and the icon. The manipulation information is provided to the transmitter **125**. The transmitter **125** transmits the manipulation information to the control terminal **11**.

The receiver **118** of the control terminal **11** receives the manipulation information and provides the manipulation information to the received data analyzer **117**. The received data analyzer **117** analyzes the manipulation information, and stores the command in the control code table RAM **115** and the icon corresponding to the command in the display font RAM **119**.

The icon stored in the display RAM **119** is read out by the display controller **116** and is displayed by the display device **114**. In this way, icons are displayed as shown in Figure **2**, whereby the user can see the functions of the manipulation buttons of the selection device **111**.

When one of the manipulation buttons is selectively pressed by the user, the transmitting data generator **112** refers to the control code table RAM **115** and fetches a command corresponding to the pressed manipulation button. For example, when the manipulation button corresponding to the icon representing "rewind" shown in Figure **2** is pressed by the user, the transmitting data generator **112** fetches command **3** shown in Figure **3** from the control code table RAM **115** and transmits the signal indicating the command **3** from the transmitter **113** to the network terminal **12**.

The receiver **121** of the network terminal **12** receives the signal indicating the command **3**, and provides the command **3** to the received data analyzer **122**. The received data analyzer **122** analyzes the command **3** and requests to the network terminal controller **124** to perform the desired operation. The network terminal controller **124** executes the command **3** and instructs the video player **21** to rewind.

In the above-described manner, the manipulation information is transmitted from the network terminal **12** to the control terminal **11**, whereby a manipulation environment for remotely controlling the network terminal **12** is established in the control terminal **11**.

Even when a plurality of unspecified network terminals are used, manipulation environments for remotely controlling the network terminals can be established based on manipulation information which is provided from the network terminals to the control terminal when the network terminals are combined with the control terminal. A manipulation environment for remotely controlling the network is established for each network terminal. By registering the manipulation environments in the control terminal, the plurality of network terminals can be remotely controlled by one control terminal.

However, the above-described conventional network control system **100** has the following problems.

In the conventional network control system **100**, even a manipulation button, for example, a power button, which performs a same operation to all of the network terminals, is set by transmitting a combination of a command and an icon thereof from the network terminal to the control terminal. As a result, such a button may not be arranged in the same way for all of the network terminals.

Since commands and icons are transmitted for all of the manipulation buttons from the network terminal to the control terminal, the amount of transmitted information is large, which requires a long time for transmitting the information. For example, when one icon is represented by a 16 x 16 bit map, a total of 256 bits need to be transmitted. When the information transmission rate by an infrared signal from the network terminal to the control terminal is 200 bits per second, a transmission time of 1 second or more is required for each icon.

According to the conventional network control system **100**, there is no function of collectively arranging a plurality of related manipulation buttons instructing similar functions, for example, a pair of volume buttons for instructing "Volume up" and "Volume down". In this case, therefore, the pair of volume buttons may not be collectively arranged in convenient positions.

According to the conventional network control system **100**, although a plurality of network terminals can be remotely controlled by one control terminal, they cannot be collectively controlled. For example, when one application is realized by a plurality of network terminals, each of the networks needs to be remote controlled by the control terminal separately.

### SUMMARY OF THE INVENTION

According to one aspect of the present invention, a network control system is provided which includes: a network terminal; and a control terminal. The network terminal transmits to the control terminal manipulation information indicating a type of at least one manipulation component and a manipulation requesting signal corresponding to the manipulation component, receives from the control terminal the manipulation requesting signal, and performs an operation corresponding to the manipulation requesting signal upon receipt of the manipulation requesting signal from the control terminal. The control terminal includes at least one manipulation component, receives and analyzes the manipulation information from the network terminal, selects the type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal.

In accordance with one embodiment of the present invention, a predetermined manipulation component of the at least one manipulation component predeterminedly corresponds to a predetermined operation of the network terminal.

In accordance with one embodiment of the present invention, the at least one manipulation component is assigned to a physical manipulation button of the control terminal.

In accordance with one embodiment of the present invention, the at least one manipulation component is assigned to a manipulation button displayed on a display section of the control terminal.

In accordance with one embodiment of the present invention, the at least one manipulation component includes manipulation components belonging to a manipulation component group, and the control terminal collectively processes the manipulation component of the manipulation component group.

In accordance with one embodiment of the present invention, the network control system includes a plurality of network terminals, at least one of which identifies an application which can be realized by exchanging function information among the plurality of network terminals; transmits to the control terminal manipulation information indicating a type of at least one manipulation component for controlling the function and a manipulation requesting signal corresponding to the manipulation component, receives the manipulation requesting signal from the control terminal, and performs an operation corresponding to the manipulation requesting signal upon receipt of the manipulation requesting signal from the control terminal.

In accordance with one embodiment of the present invention, the control terminal is a remote controller for remotely controlling the network terminal.

According to another aspect of the present invention, a network terminal is provided which is controlled by a control terminal including at least one manipulation component. The network terminal transmits to the control terminal manipulation information indicating a type of at least one manipulation component and a manipulation requesting signal corresponding to the manipulation component, receives manipulation requesting signal, and performs an operation corresponding to the manipulation requesting signal upon receipt of the manipulation requesting signal from the control terminal.

In accordance with one embodiment of the present invention, a predetermined manipulation component of the at least one manipulation component of the control terminal predeterminedly corresponds to a predetermined operation of the network terminal.

In accordance with one embodiment of the present invention, the at least one manipulation component includes a manipulation components belonging to a manipulation component group, and the control terminal collectively processes the manipulation component of the manipulation component group.

In accordance with one embodiment of the present invention, the network terminal identifies an application which can be realized by exchanging function information among a plurality of network terminals, transmits to the control terminal manipulation information indicating a type of at least one manipulation component for controlling the function and a manipulation requesting signal corresponding to the manipulation component, and performs an operation corresponding to the manipulation requesting signal upon receipt of the manipulation requesting signal from the control terminal.

According to still another aspect of the present invention, a network terminal is provided which is controlled by a control terminal including at least one manipulation component. The network terminal includes: a memory section for storing manipulation information indicating a type of the at least one manipulation component and a manipulation requesting signal corresponding to the manipulation component; a two-way communication section for transmitting to the control terminal the manipulation information stored in the memory section, and receiving the manipulation requesting signal from the control terminal; and a control section for performing an operation corresponding to the manipulation requesting signal in response to the manipulation requesting signal received by the two-way communication section.

According to still another aspect of the present invention, a control terminal for controlling a network terminal is provided which performs an operation in response to a manipulation requesting signal. The control terminal including at least one manipulation component receives and analyzes manipulation information from the network terminal and selects a type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal.

In accordance with one embodiment of the present invention, a predetermined manipulation component of the at least one manipulation component predeterminedly corresponds to a predetermined operation of the network terminal.

In accordance with one embodiment of the present invention, the at least one manipulation component is assigned to a physical manipulation button of the control terminal.

In accordance with one embodiment of the present invention, the at least one manipulation component is assigned to a manipulation button displayed on a display section of the control terminal.

In accordance with one embodiment of the present invention, the at least one manipulation component includes manipulation components belonging to a manipulation component group, and the control terminal collectively processes the manipulation component of the manipulation component group.

In accordance with one embodiment of the present invention, the control terminal is a remote controller for remotely controlling the network terminal.

According to still another aspect of the present invention, a control terminal for controlling a network terminal for performing an operation in response to a manipulation requesting signal from the control terminal. The control terminal includes: at least one manipulation component; a two-way communication section for receiving manipulation information from the network terminal and transmitting a manipulation requesting signal to the network terminal; and a control section which analyzes the manipulation information received via the two-way communication system, selects a type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal via the two-way communication section.

According to still another aspect of the present invention, a network control system is provided which includes: a plurality of network terminals, at least one of which identifies an application which can be realized by exchanging function information among the plurality of network terminals, transmits to the control terminal manipulation information indicating a manipulation environment for controlling the function and a manipulation requesting signal corresponding to the manipulation component, receives the manipulation requesting signal from the control terminal, and performs an operation corresponding to the manipulation requesting signal upon receipt of the manipulation requesting signal from the control terminal; and a control terminal which receives and analyzes the manipulation information, establishes the manipulation environment indicated by the manipulation information, and when the manipulation environment is manipulated intended for the function, transmits the manipulation requesting signal to at least one of the network terminals.

According to still another aspect of the present invention, a plurality of network terminals which are controlled by a control terminal including at least one manipulation component are provided. At least one of the plurality of network terminals identifies an application which can be realized by exchanging function information among the plurality of network terminals, and transmits to the control terminal manipulation information indicating a manipulation environment for controlling the function and a manipulation requesting signal, and performs an operation corresponding to the function upon receipt of the manipulation requesting signal from the control terminal.

Thus, the invention described herein makes possible the advantages of providing: (1) a network control system in which the amount of manipulation information transmitted from a network terminal to a control terminal is reduced; (2) a network control system in which manipulation components which perform same operations to a plurality of network terminals are already provided in the control terminal so as to provide the control terminal with a usable manipulation environment; (3) a network control system in which related manipulation components are set in the control terminal as a group so as to provide the control terminal with a usable manipulation environment; and (4) a network control system in which a manipulation environment for remotely controlling an application which is provided by a plurality of network terminals can be automatically set.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram showing a conventional network control system;
Figure **2** is a schematic diagram showing a video apparatus which is provided with the network terminal shown in Figure **1**;
Figure **3** is a table showing examples of commands and icons corresponding thereto in the network control system shown in Figure **1**;
Figure **4A** is a block diagram schematically showing a network control system according to a first example of the present invention;
Figure **4B** is a schematic sequence chart showing a communication protocol of the network control system according to the first example of the present invention;
Figure **5** is a block diagram showing an exemplary application of the network control system according to the first example of the present invention;
Figure **6** is a view showing the external appearance of a control terminal in the network control system according to the first example of the present invention;
Figure **7A** shows a manipulation environment of the control terminal of Figure **6** for the television terminal;
Figure **7B** shows a manipulation environment of the control terminal of Figure **6** for the video terminal;
Figure **7C** shows a manipulation environment of the control terminal **41** of Figure **6** for the image receiver terminal;
Figure **8** is a data table showing types of the manipulation components according to the first example of the present invention;
Figure **9** is a diagram showing manipulation information for establishing the manipulation environment shown in Figure **7A** for remotely controlling the television terminal of the network control system according to the first example of the present invention;
Figure **10** is a diagram showing manipulation information for establishing the manipulation environment shown in Figure **7B** for remotely controlling the video terminal of the network control system according to the first example of the present invention;
Figure **11** is a diagram showing manipulation information for establishing the manipulation environment shown in Figure **7C** for remotely controlling the image receiver terminal in the network control system according to the first example of the present invention;
Figure **12** is a flow diagram showing processes performed by the control terminal of the network control system according to the first example of the present invention;
Figure **13** is a schematic diagram showing a network control system according to a second example of the present invention;
Figure **14** is a view showing a manipulation environment for remotely controlling a car navigation system established on the control terminal according to the second example of the present invention;
Figure **15** is a diagram showing a manipulation information for establishing the manipulation environment shown in Figure **14** for remotely controlling the car navigation system in the network control system according to the second example of the present invention;
Figure **16** is a view showing a plurality of display screens according to the second example of the present invention;
Figure **17** is a view showing a plurality of display screens in the conventional system;
Figure **18** is a block diagram schematically showing a network control system according to a third example of the present invention;
Figure **19** is a table showing function information which is exchanged among the network terminals according to the third example of the present invention;
Figure **20** is a block diagram schematically showing a network control system according to a fourth example of the present invention;
Figures **21A** through **21C** are views showing display screens according to the fourth example of the present invention, respectively;
Figure **22** is a table showing function information which is exchanged among the network terminals according to the fourth example of the present invention;
Figure **23** is a diagram showing manipulation information for establishing a manipulation environment shown in Figure **21A** for remotely controlling a video player of the network control system according to the fourth example of the present invention;
Figure **24** is a diagram showing the manipulation information for establishing the manipulation environment shown in Figure **21B** for remotely controlling the video player of the network control system according to the fourth example of the present invention;
Figure **25** is a diagram showing the manipulation information for establishing the manipulation environment for remotely controlling a car navigation system of the network control system according to the fourth example of the present invention; and
Figure **26** is a diagram showing the manipulation information for establishing the manipulation environment shown in Figure **21C** for remotely controlling the car navigation system of the network control system according to the fourth example of the present invention.

### DESCRIPTION OF THE PREFERRED EMBODIMENTS

Hereinafter, the present invention will be described by way of illustrative examples with reference to the accompanying drawings.

### (Example 1)

Hereinafter, a network control system **400** including a control terminal **41** and a network terminal **43** according to a first example of the present invention will be described.

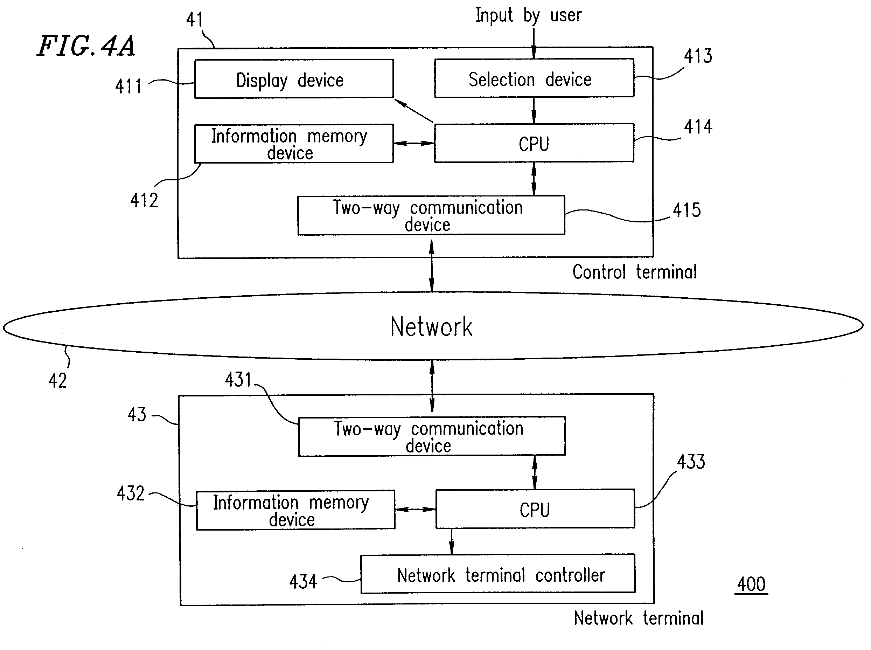

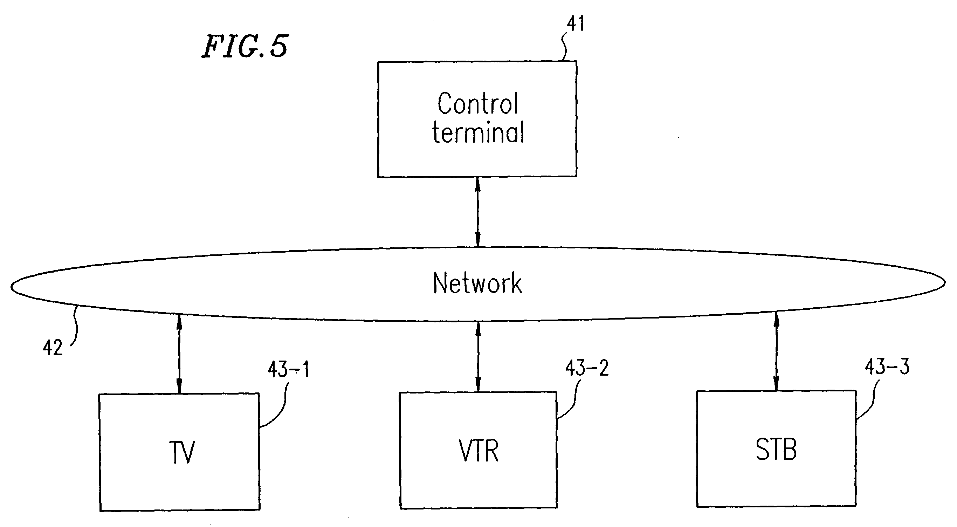

Figure **4A** is a block diagram schematically showing the network control system **400** according to the first example of the present invention. Figure **5** is a block diagram showing an exemplary application of the network control system **400** according to the first example of the present invention.

Referring to Figure **4A**, the network control system **400** includes the control terminal **41**, the network terminal **43** and a network **42**. The network **42** provides connections between the control terminal **41** and a respective one of a television terminal **43-1** (Figure **5**), a video terminal **43-2** (Figure **5**) and an image receiver terminal (Set Top Box) **43-3** (Figure **5**). The television terminal **43-1**, the video terminal **43-2** and the image receiver terminal **43-3** are network terminals **43** which are remotely controlled by one control terminal **41**. The network terminal **43** shown in Figure **4A** may be any one of the television terminal **43-1**, the video terminal **43-2** or the image receiver terminal **43-3**. In the figure, only common components of the network terminals **43** are shown.

Referring to Figure **5**, the network **42** providing connections between the control terminal **41** and respective one of the television terminal **43-1**, the video terminal **43-2** and the image receiver terminal **43-3** is shown.

Returning to Figure **4A**, the control terminal **41** includes a display device **411**, an information memory device **412**, a selection device **413,** a central processing unit (hereinafter, simply referred to as a "CPU") **414** and a two-way communication device **415**. The network terminal **43** includes a two-way communication device **431**, an information memory device **432**, a CPU **433** and a network terminal controller **434**.

The network **42** is an infrared network which enables two-way communication between the control terminal **41** and the network terminal **43**.

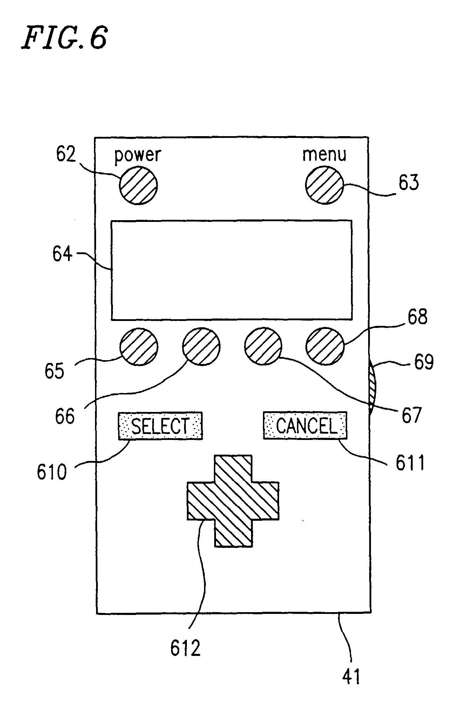

Figure **6** is a plan view showing the appearance of the control terminal **41**. Referring to Figure **6**, the control terminal **41** has a power button **62**, a menu button **63**, a display panel **64** of the display device **411,** variable buttons **65**, **66**, **67** and **68**, a jog dial **69**, a select button **610**, a cancel button **611** and a cross-shaped button **612**. The above-described buttons are included in the selection device **413**.

The power button **62** performs a same operation to each of the network terminals **43-1**, **43-2** and **43-3**, and turns the network terminals **43** on and off.

The menu button **63** performs a same operation to each of the network terminals **43-1**, **43-2** and **43-3**, and is used to call a menu for each of the network terminals **43**.

The variable buttons **65**, **66**, **67** and **68** are assigned with functions unique to each of the network terminals **43-1**, **43-2** and **43-3**, for remotely controlling the network terminals **43-1**, **43-2** and **43-3**. The functions of the variable buttons **65**, **66**, **67** and **68** are displayed on the display panel **64**. In other words, the display panel **64** displays icons and text corresponding to the variable buttons **65**, **66**, **67** and **68**, thereby representing the functions unique to the network terminals **43-1**, **43-2** and **43-3.**

The jog dial **69** is used for selecting the network terminal **43-1**, **43-2** or **43-3** which is to be remotely controlled. By rotating the jog dial **69**, the network terminal **43-1**, **43-2** or **43-3** can be switched from one to another.

The select button **610** and the cancel button **611** perform same operations to the network terminals **43-1**, **43-2** and **43-3**. The select button **610** and the cancel button **611** are used to select menu displayed on a display panel of the network terminal **43-1**, **43-2** or **43-3**, or to cancel the selected menu.

The cross-shaped button **612** performs the same operation to the network terminals **43-1**, **43-2** and **43-3**. The cross-shaped button **612** is used to move a cursor on the menu displayed on the display panel of the network terminal **43-1**, **43-2** or **43-3**.

The power button **62**, the menu button **63**, the select button **610**, the cancel button **611** and the cross-shaped button **612** perform the same operations to the network terminals **43-1**, **43-2** and **43-3**. Since each of these buttons has a fixed position and a fixed function, a user can easily manipulate the control terminal **41**.

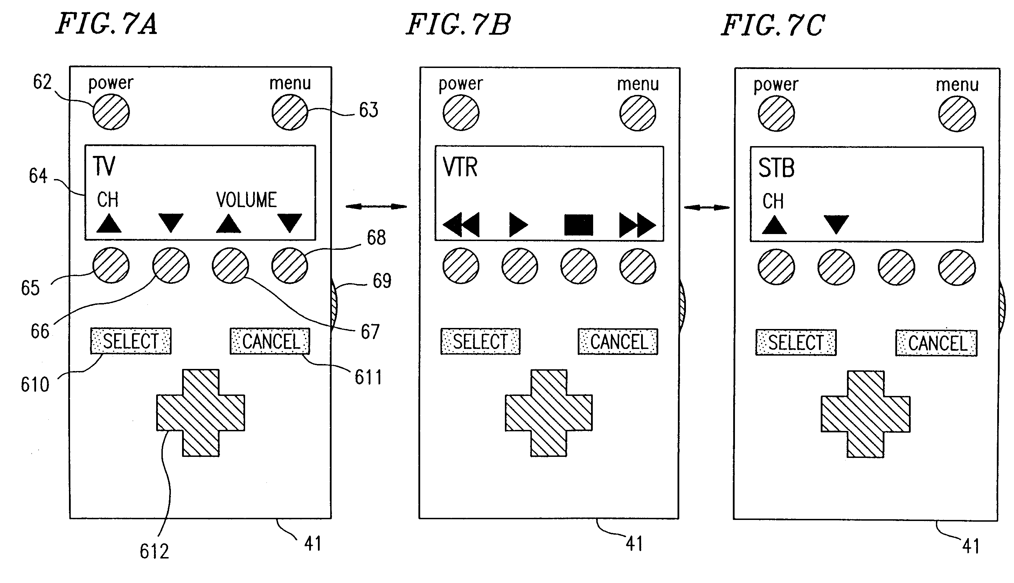

Figures **7A**, **7B** and **7C** are plan views showing the manipulation environments of the control terminal **41** for the television terminal **43-1**, the video terminal **43-2** and the image receiver terminal **43-3**, respectively.

Figure **7A** shows the manipulation environment of the control terminal **41** for the television terminal **43-1**. Referring to Figure **7A**, text "TV" appears on the upper left corner of the display panel **64**, indicating that the television terminal **43-1** is selected. Only the power button **62** is validated as a common operation button. The variable buttons **65**, **66**, **67** and **68** are assigned with the commands "channel up", "channel down", "volume up" and "volume down", respectively. Icons indicating the respective functions are displayed on the display panel **64** so as to correspond to the variable buttons **65**, **66**, **67** and **68**, respectively.

Figure **7B** shows the manipulation environment of the control terminal **41** for the video terminal **43-2**. Referring to Figure **7B**, text "VTR" appears on the upper left corner of the display panel **64**, indicating that the video terminal **43-2** is selected. Only the power button **62** is validated as a common operation button. The variable buttons **65**, **66**, **67** and **68** are assigned with the commands "rewind", "play", "stop" and "fast forward", respectively. Icons indicating the respective functions are displayed on the display panel **64** so as to correspond to the variable buttons **65**, **66**, **67** and **68**, respectively.

Figure **7C** shows the manipulation environment of the control terminal **41** for the image receiver terminal **43-3**. Referring to Figure **7C**, text "STB" appears on the upper left corner of the display panel **64**, indicating that the image receiver terminal **43-3** is selected. The power button **62**, the menu button **63**, the select button **610**, the cancel button **611** and the cross-shaped button **612** are validated as common operation buttons. The two variable buttons **65** and **66** are assigned with the commands "channel up" and "channel down", respectively. Icons indicating the respective functions are displayed on the display panel **64** so as to correspond to the variable buttons **65** and **66**, respectively.

In the above-described manipulation environments, text indicating the selected network terminal **43** to be controlled is always displayed on the upper left corner of the display panel **64**. Therefore, the user can see which network terminal **43** is presently selected. By rotating the jog dial **69**, the network terminal **43** to be controlled can be switched among the television terminal **43-1**, the video terminal **43-2** and the image receiver terminal **43-3**, whereby the manipulation environment corresponding to the selected network terminal **43** is switched as well.

In order to set the above-described manipulation environments in the control terminal **41** to remotely control the network terminal **43**, the manipulation environment for each network terminal **43** needs to be registered in the control terminal **41** in advance. When the network terminal **43** is connected to the network **42**, e.g., the infrared network, manipulation information defining a manipulation environment is transmitted from the network terminal **43** to the control terminal **41**, thereby registering the manipulation environment for remotely controlling the network terminal **43**.

Hereinafter, a process for registering the manipulation environment for remotely controlling the network terminal **43** will be described in detail.

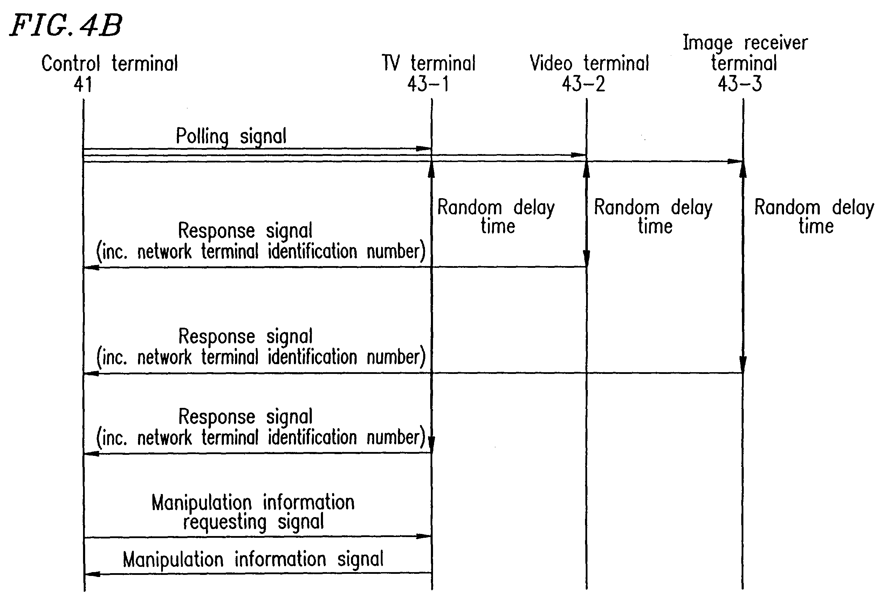

Figure **4B** is a schematic sequence chart showing a communication protocol of the network control system **400** according to the first example of the present invention.

The control terminal **41** periodically transmits a polling signal to each of the network terminals **43** via the infrared network **42** in a manner represented by the sequence chart shown in Figure **4B**.

Specifically, the CPU **414** of the control terminal **41** periodically transmits the polling signal to the infrared network **42** via the two-way communication device **415**.

Each of the network terminals **43** receives the polling signal via the two-way communication device **431** and inputs the polling signal to the CPU **433**. Upon receiving the polling signal, the CPU **433** of the network terminals **43** generates a response signal including an identification number of the corresponding network terminal **43**, thereby transmitting the response signal to the infrared network **42**.

In the above-described manner, the response signals corresponding to the network terminals **43** are transmitted to the control terminal **41**. Each of the network terminals **43** has a predetermined response delay time. The response signal is transmitted from each network terminal **43** with the respective predetermined response delay time after receiving the polling signals. Accordingly, competition between the response signals corresponding to each network terminals **43** is prevented.

The two-way communication device **415** of the control terminal **41** sequentially receives the response signal from each of the network terminals **43** and sequentially inputs the response signal to the CPU **414**. The CPU **414** recognizes each identification number included in the response signals and stores the identification number in the information memory device **412**. The CPU **414** collates the identification numbers with the identification numbers previously stored in the information memory device **412**. Accordingly, the network terminal **43** which is to be newly registered is recognized by the control terminal **41**, and the identification number for the network terminal **43** to be newly registered is stored in the control terminal **41**.

Hereinafter, an exemplary case will be described where the identification numbers of the video terminal **43-2** and the image receiver terminal **43-3** are already stored in the control terminal **41** and the identification number of the television terminal **43-1** is to be newly registered in the control terminal **41**.

Since the identification numbers of the video terminal **43-2** and the image receiver terminal **43-3** are already stored in the control terminal **41** at this point, the manipulation environments for remotely controlling the video terminal **43-2** and the image receiver terminal **43-3** are already registered in the control terminal **41**. On the other hand, the manipulation environment for remotely controlling the television terminal **43-1** has not yet been registered in the control terminal **41**.

The manipulation environment for remotely controlling the television terminal **43-1** is registered as follows.

The CPU **414** of the control terminal **41** generates signals requesting manipulation information including the identification number of the television terminal **43-1**, and transmits the manipulation information requesting signals to the television terminal **43-1** via the two-way communication device **415**.

The manipulation information requesting signals are input to the CPU **433** of the television terminal **43-1**, whereby the CPU **433** confirms the identification number of the television terminal **43-1** and outputs an instruction to the information memory device **432** to output the manipulation information. In response to this, the information memory device **432** outputs previously stored manipulation information to the CPU **433**. The CPU **433** transmits the manipulation information to the control terminal **41** together with the identification number of the television terminal **43-1** via the two-way communication device **431**.

The manipulation information from the television terminal **43-1** is input to the CPU **414** of the control terminal **41** via the two-way communication device **415**, whereby the CPU **414** confirms the identification number of the television terminal **43-1** and stores the manipulation information in the information memory device **412**. Since the manipulation information represents the manipulation environment for remotely controlling the television terminal **43-1,** the manipulation environment is registered in the control terminal **41** at this point. Once the manipulation environment of the television terminal **43-1** is registered in the control terminal **41**, the control terminal **41** no longer requests manipulation information to be output from the television terminal **43-1**.

The CPU **414** fetches the appropriate manipulation environment from the information memory device **412**, thereby analyzing the manipulation information. The manipulation information is analyzed for preparing the manipulation environment for remotely controlling the network terminal **43**.

The CPU **414** instructs the display device **411** to output the display information, whereby a predetermined display of the manipulation environment is displayed on the display panel **64**. The predetermined buttons of the control terminal **41** are validated to act as manipulation buttons.

For example, in the case of the manipulation environment for remotely controlling the television terminal **43-1** shown in Figure **7A**, text "TV" is displayed on the display panel **64**, the power button **62** and the variable buttons **65**, **66**, **67** and **68** are validated, and icons representing the functions are displayed on the display panel **64**. The manipulation environment for remotely controlling the television terminal **43-1** is thus formed.

After each of the manipulation environments for remotely controlling the network terminals **43** has been registered into the control terminal **41**, the network terminals **43-1**, **43-2** and **43-3** can be selected by rotating the jog dial **69** so as to be remotely controlled by the control terminal **41**.

When, for example, the television terminal **43-1** is selected by manipulating the jog dial **69**, the CPU **414** fetches the manipulation information of the television terminal **43-1** from the information memory device **412**, thereby analyzing the manipulation information and establishing the manipulation environment for the television terminal **43-1**.

In this state, when the user presses a button of the selection device **413**, the selection device **413** outputs a manipulation requesting signal corresponding to the pressed button to the CPU **414**. The CPU **414** transmits the manipulation requesting signal to the network **42** together with the identification number of the television terminal **43-1** via the two-way communication device **415**.

The television terminal **43-1** receives the manipulation requesting signal and the identification number via the two-way communication device **431**. The signal is then input to the CPU **433**. The CPU **433** confirms that the identification number is that of the television terminal **43-1**, and then outputs the manipulation requesting signal to the network terminal controller **434**. The network terminal controller **434** performs an operation represented by the manipulation requesting signal.

As a result, a predetermined operation of the television terminal **43-1** which is requested by manipulating the button of the control terminal **41** is performed.

Hereinafter, a specific format of the manipulation information, a process of analyzing the manipulation information by the CPU **414** and a specific format of the manipulation requesting signal will be described.

As previously described, the manipulation information according to the conventional network control system **100** consists of sets of a command and an icon. In this case, the manipulation buttons which perform the same operations to all of the network terminals are not always arranged in the same way for all of the network terminals. Moreover, even when frequently used icon and text such as "channel up", "channel down", "volume up" and "volume down" are used, the same icon and text need to be transmitted a great number of times, thereby rendering the system ineffective. In addition, even for the same icon and text such as "channel up", "channel down", "volume up" and "volume down", the shapes of the icons may be different among different network terminals, thereby confusing the user.

In order to overcome the above-described problems, the manipulation environment of the control terminal **41** according to the first example of the present invention includes a plurality of manipulation components which are defined of their types in advance. The manipulation information transmitted from the network terminal **43** to the control terminal **41** has identification numbers for identifying numbers for identifying the manipulation components, types of the manipulation components and additional information.

Hereinafter, the types of the manipulation components according to the first example of the present invention will be described. The types of the manipulation components represent basic types of the manipulation components. All of the manipulation buttons and display contents belong to one type of a manipulation component.

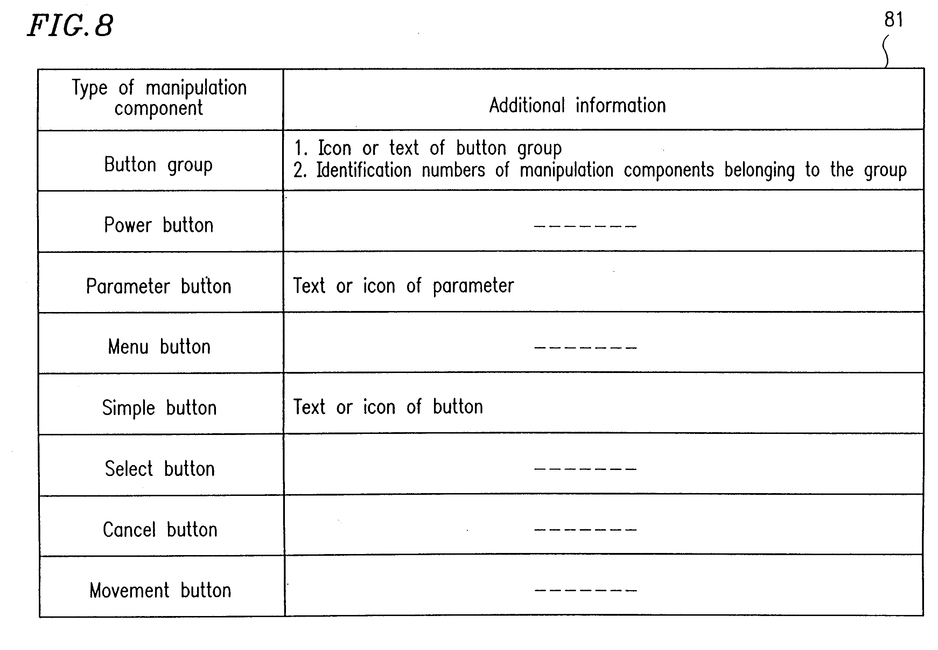

Figure **8** is a data table **81** showing the types of the manipulation components according to the first example of the present invention.

With reference to Figure **8**, a manipulation component of a type "Button group" is a group of a plurality of lower order manipulation components. As additional information, the "Button group" has text and icons, and identification numbers of the manipulation components belonging to the group. The identification numbers of the manipulation components are used for identifying the manipulation components and are assigned to all of the manipulation components.

A manipulation component of a type "Power button" is the power button **62**, having no additional information.

A manipulation component of a type "parameter button" is a set of variable buttons **65** and **66** or a set of variable buttons **67** and **68**, having text and/or icon as additional information.

A manipulation component of a type "Menu button" is the menu button **63**, having no additional information.

Each of manipulation components of a type "Simple button" is the variable button **65**, **66**, **67** or **68** assigned with a corresponding function. The "Simple button" has text and/or icon representing the corresponding function as additional information.

A manipulation component of a type "Select button" is the select button **610,** having no additional information.

A manipulation component of a type "Cancel" only applies to the cancel button **611**, having no additional information.

A manipulation component of a type "Movement button" is the cross-shaped button **612**, having no additional information.

The manipulation information according to the first example of the present invention which is transmitted from the network terminal **43** to the control terminal **41** includes at least a part of the information shown in Figure **8**. The control terminal **41** has data and program for decrypting the manipulation information including the identification numbers, the manipulation component types and the additional information. By decrypting the manipulation information transmitted from the network terminal **43**, the manipulation environment for remotely controlling the network terminal **43** is established on the control terminal **41**.

In the conventional network control system **100**, icons for every button need to be transmitted to the control terminal.

According to the first example of the present invention, however, the amount of information to be transmitted is reduced since there are manipulation components with no additional information. Furthermore, each of manipulation components which is common to the plurality of network terminals **43** is already defined and assigned to one manipulation button of the control terminal **41**. Therefore, a manipulation environment which may be comfortably manipulated by the user is realized.

For example, in the case of the power button **62**, there is no need to transmit an icon thereof as manipulation information since the power button **62** is fixedly prepared on the control terminal **41**. Moreover, since the power button **62** is commonly used among the plurality of network terminals **43**, it is easy for the user to manipulate the control terminal **41**.

Hereinafter, the content of the manipulation information transmitted from each of the television terminal **43-1**, the video terminal **43-2** and the image receiver terminal **43-3** in order to establish the manipulation environment shown in Figures **7A**, **7B** and **7C** will be described.

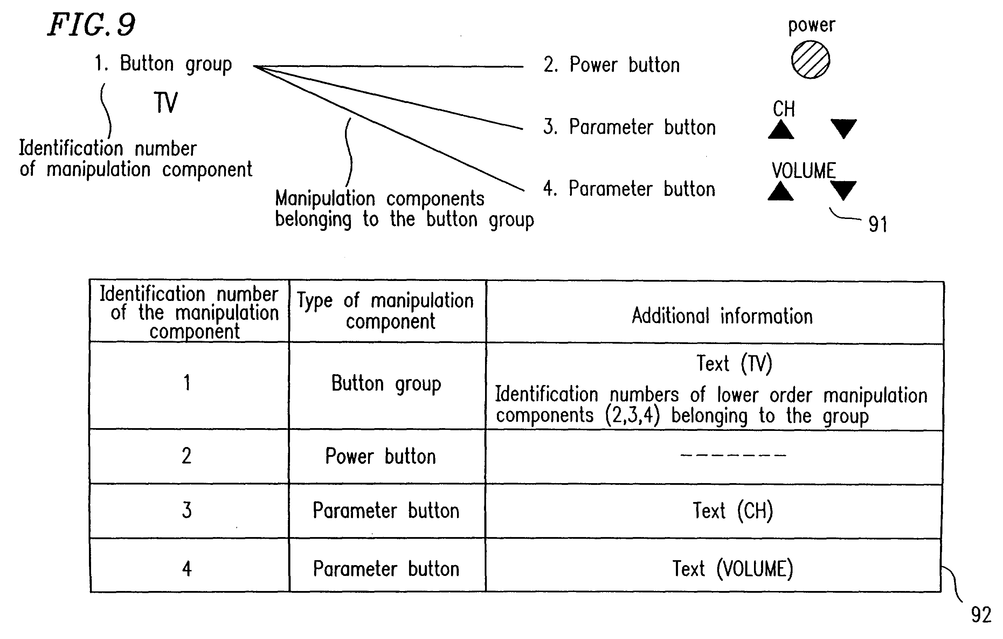

Figure **9** is a diagram showing the manipulation information **92** for establishing the manipulation environment shown in Figure **7A** for remotely controlling the television terminal **43-1** of the network control system **400** according to the first example of the present invention. Figure **9** further shows the manipulation components **91** represented by the manipulation information **92**.

In the manipulation information **92**, the manipulation component type "Button group" given an identification number **1** is a main button group of the television terminal **43-1**. The "Button group" includes text "TV" as additional information which is displayed on the upper left corner of the display panel **64** of the display device **411**. The "Button group" further includes, as the additional information, identification numbers **2**, **3** and **4** corresponding to the lower order manipulation components belonging to the group.

The manipulation component type "Power button" given the identification number **2** represents the power button **62**, and includes no additional information.

The manipulation component type "Parameter button" given the identification number **3** represents buttons for instructing "channel up" and "channel down". The "Parameter button" includes text "CH" as the additional information. An upwardly pointing arrow icon and a downwardly pointing arrow icon are registered in the control terminal **41** in advance as additional information of the "Parameter Button". The upwardly pointing arrow icon and the downwardly pointing arrow icon are displayed with the text "CH" as shown in Figure **7A**. The variable buttons **65** and **66** below the icons are used for instructing "channel up" and "channel down".

The manipulation component type "Parameter button" given the identification number **4** represents buttons for instructing "volume up" and "volume down". The "Parameter button" includes text "VOLUME" as the additional information. An upwardly pointing arrow icon and a downwardly pointing arrow icon are registered in the control terminal **41** in advance as additional information of the "Parameter Button". The upwardly pointing arrow icon and the downwardly pointing arrow icon are displayed with the text "VOLUME" as shown in Figure **7A**. The variable buttons **67** and **68** below the icons are used for instructing "volume up" and "volume down".

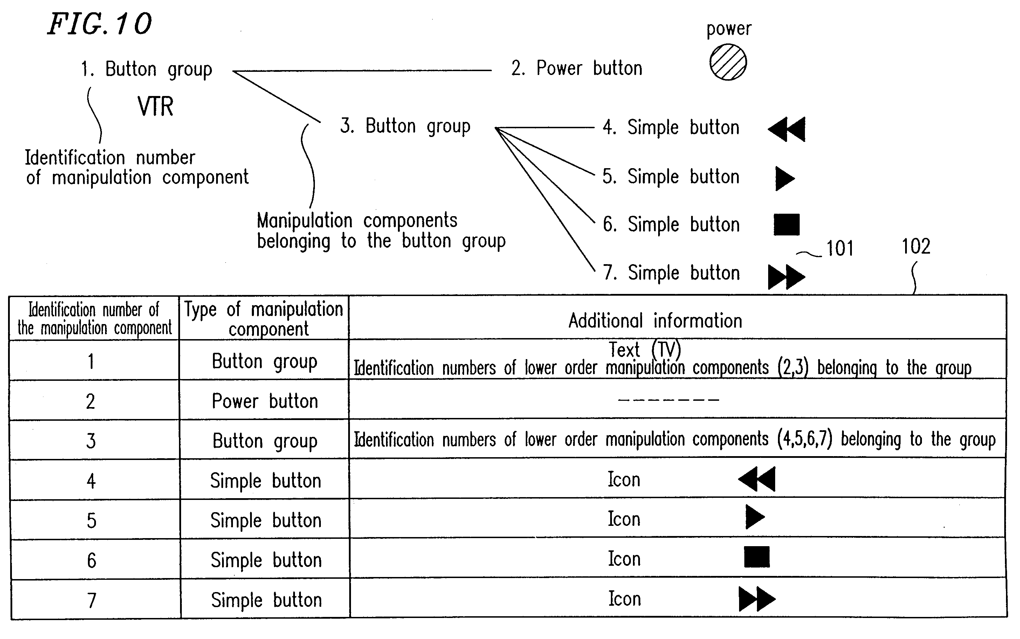

Figure **10** is a diagram showing the manipulation information **102** for establishing the manipulation environment shown in Figure **7B** for remotely controlling the video terminal **43-2** of the network control system **400** according to the first example of the present invention. Figure **10** further shows the manipulation components **101** represented by the manipulation information **102**.

In the manipulation information **102**, the manipulation component type "Button group" given an identification number **1** is a main button group of the video terminal **43-2**. The "Button group" includes text "VTR" as additional information which is displayed on the upper left corner of the display panel **64** of the display device **411**. The "Button group" further includes, as the additional information, identification numbers **2** and **3** corresponding to the lower order manipulation components belonging to the group.

The manipulation component type "Power button" given the identification number **2** represents the power button **62**, and includes no additional information.

The manipulation component type "Button group" given the identification number **3** is a group of lower order manipulation components for controlling the video terminal **43-2**. The "Button group" further includes identification numbers **4**, **5**, **6** and **7** corresponding to the lower order manipulation components belonging to the group.

The manipulation component type "Simple button" given the identification number **4** represents a button for instructing "rewind" and includes an icon representing "rewind". The icon is displayed on the display panel **64** as shown in Figure **7B**. The variable button **65** below the icon is used for instructing "rewind".

Similarly, the manipulation component types "Simple button" given the identification numbers **5**, **6** and **7** represent buttons for instructing "play", "stop" and "fast forward", respectively, and includes icons representing "play", "stop" and "fast forward", respectively. The icons are displayed on the display panel **64** as shown in Figure **7B**. The variable buttons **66**, **67** and **68** below the icons are used for instructing "play", "stop" and "fast forward", respectively.

Since the manipulation components given the identification numbers **4**, **5**, **6** and **7** belong to the higher order manipulation component type given the identification number **3**, they are treated as a group in the manipulation environment **102**. Accordingly, even when the control terminal **41** has more than four variable buttons, the manipulation components given the identification numbers **4**, **5**, **6** and **7** are treated as one group and are sequentially and collectively assigned to the plurality of variable buttons so that the manipulation components are arranged close to each other.

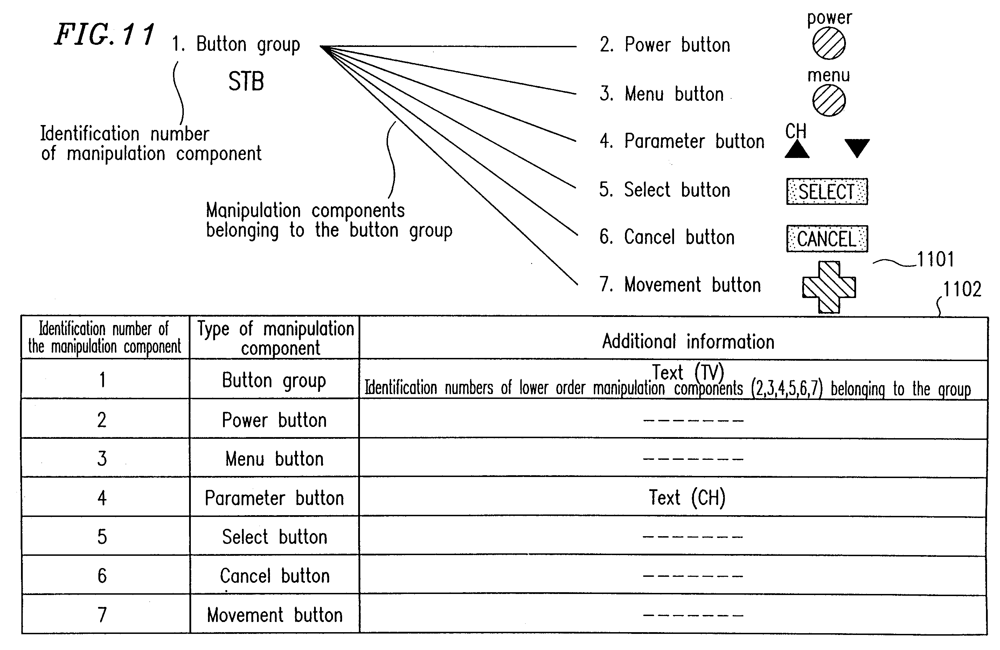

Figure **11** is a diagram showing the manipulation information **1102** for establishing the manipulation environment shown in Figure **7C** for remotely controlling the image receiver terminal **43-3** in the network control system **400** according to the first example of the present invention. Figure **11** further shows the manipulation components **1101** represented by the manipulation information **1102**.

In the manipulation information **1102**, the manipulation component type "Button group" given an identification number **1** is a main button group of the image receiver terminal **43-3**. The "Button group" includes text "STB" as additional information which is displayed on the upper left corner of the display panel **64** of the display device **411**. The "Button group" further includes, as the additional information, identification numbers **2**, **3**, **4**, **5**, **6** and **7** corresponding to the lower order manipulation components belonging to the group.

The manipulation component type "Power button" given the identification number **2** represents the power button **62**, and includes no additional information.

The manipulation component type "Parameter button" given the identification number **3** represents the menu button **63**.

The manipulation component type "Parameter button" given the identification number **4** represents buttons for instructing "channel up" and "channel down". The "Parameter button" includes text "CH" as additional information. An upwardly pointing arrow icon and a downwardly pointing arrow icon are registered in the control terminal **41** in advance as additional information of the "Parameter Button". The upwardly pointing arrow icon and the downwardly pointing arrow icon are displayed with the text "CH" as shown in Figure **7C**. The variable buttons **65** and **66** below the icons are used for instructing "channel up" and "channel down".

The manipulation component type "Select" given the identification number **5** represents the select button **610**.

The manipulation component type "Cancel" given the identification number **6** represents the cancel button **611**.

The manipulation component type "Movement button" given the identification number **7** represents the cross-shaped button **612**.

The above-described manipulation information is transmitted from each of the network terminals **43** to the control terminal **41**. Based on this manipulation information, the manipulation environments for remotely controlling the network terminals are registered in the control terminal **41**.

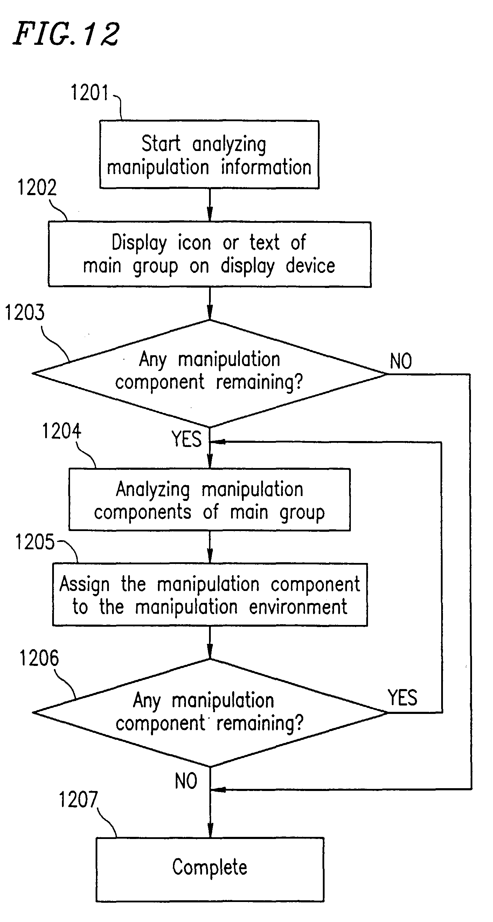

Hereinafter, analysis of the manipulation information performed by the control terminal **41** will be described with reference to Figure **12**.

Figure **12** is a flow diagram showing operations performed by the control terminal **41** of the network control system **400** according to the first example of the present invention.

Once the CPU **414** of the control terminal **41** receives the manipulation information from the network terminal **43**, the CPU **414** starts analyzing the manipulation information (Step 1201). The CPU **414** selects and analyzes a manipulation component corresponding to the main button group from the manipulation information, thereby reading and displaying an icon and/or text of the manipulation component on the upper left corner of the display panel **64** (Step 1202). Thereafter, when the manipulation information still includes an unprocessed manipulation component (Step 1203, YES), the CPU **414** analyzes the unprocessed manipulation component (Step 1204) and assigns this manipulation component to the control terminal **41** (Step 1205). Then, the CPU **414** confirms whether or not the manipulation information includes an unprocessed manipulation component (Step 1206). When the manipulation information includes an unprocessed manipulation component (Step 1206, YES), the process returns to Step 1204. When the manipulation information does not include an unprocessed manipulation component (Step 1206, NO), analysis of the manipulation information is completed.

For example, when the control terminal **41** receives the manipulation information for establishing the manipulation environment of the television terminal **43-1** shown in Figure **9**, the manipulation information is analyzed according to the following steps.

The text "TV" is read from the additional information of the manipulation component type corresponding to the main button group given the identification number **1**, and is displayed on the upper left corner of the display panel **64**.

The identification numbers **2**, **3** and **4** are read from the additional information of the manipulation component of the identification number **1**, and the manipulation components given the identification numbers **2**, **3** and **4** are analyzed.

The manipulation component type of the identification number **2** is the power button **62**. Thus the power button **62** of the control terminal **41** is validated.

The manipulation component type of the identification number **3** is "Parameter button". Thus, text "CH" is read from the additional information of the manipulation component. The text "CH" is combined with the upwardly pointing arrow icon and the downwardly pointing arrow icon which are registered in the control terminal **41** in advance, so as to be displayed on the display panel **64**. The icons are sequentially displayed from the left hand side of the display panel so that "channel up" and "channel down" are sequentially assigned to the leftmost variable button **65** and the adjacent variable button **66**.

The manipulation component type of the identification number **4** is "Parameter button". Thus, text "VOLUME" is read from the additional information of the manipulation component. The text "VOLUME" is combined with the upwardly pointing arrow icon and the downwardly pointing arrow icon which are registered in the control terminal **41** in advance, so as to be displayed on the display panel **64**. The icons are sequentially displayed on the right side of the already displayed icons so that "volume up" and "volume down" are sequentially assigned to the variable buttons **67** and **68**.

Once all of the manipulation components included in the manipulation information are analyzed, the manipulation environment for remotely controlling the television terminal **43-1** is established on the control terminal **41**. In a similar manner, the manipulation environments for remotely controlling the video terminal **43-2** and the image receiver terminal **43-3** may be established.

Hereinafter, a process for remotely controlling the network terminal **43** by the control terminal **41** will be described.

First, a manipulation requesting signal is transmitted from the control terminal **41** to the network terminal **43** which is to be remotely controlled. The manipulation requesting signal includes identification numbers and several additional information. For example, when a command indicating "power on" is to be transmitted to the television terminal **43-1**, a manipulation requesting signal including the identification number of the television terminal **43-1** and the identification number **2** corresponding to the power button **62** is transmitted to the television terminal **43-1**. In the case of the power button **62**, no additional information is included in the manipulation requesting signal.

The additional information of the manipulation requesting signal is generated only for manipulation component types "Parameter button" and "Movement button". The additional information is used for specifying the selected manipulation component.

When the user presses the variable button **65** for commanding "channel up" to the television terminal **43-1**, the control terminal **41** transmits additional information "up" which is given the identification number **3**. When the television terminal **43-1** receives the additional information "up" with the identification number **3**, channel up operation is performed.

Moreover, when the user who is remotely controlling the image receiver terminal **43-3** selects a left direction on the cross-shaped button **612**, the control terminal **41** transmits the identification number **7** and additional information "Left" to the image receiver terminal **43-3**. When the image receiver terminal **43-3** receives the identification number **7** and the additional information "Left", an operation selected by moving the cursor to the left direction by the cross-shaped button **612** is performed.

The effect of the above-described network control system **400** according to the first example of the present invention can be summarized as follows.

According to the conventional network control system **100**, in order to remotely control the network terminal, icons for all of the manipulation buttons need to be transmitted from the network terminal to the control terminal.

On the other hand, according to the first example of the present invention, for some of the manipulation components, only the types of the manipulation components need to be transmitted instead of the manipulation components. For those manipulation components, it is not necessary to transmit icons corresponding thereto, thereby reducing the amount of the manipulation information to be transmitted.

For example, in the conventional network control system **100**, when one manipulation button corresponds to bit map of 16 x 16 monochromatic icon, a total of 256 bits needs to be transmitted. In the case where only the types of the manipulation components are to be transmitted to the control terminal **41** as in the network control system **400** according to the first example of the present invention, even if there is 256 manipulation components to be transmitted, only an 8 bit signal needs to be transmitted for one manipulation button. Thus, the amount of manipulation information is reduced.

Since some of the manipulation components are fixedly set in the control terminal **41**, usability of the control terminal **41** for the user is enhanced. For example, the power button **62** which performs a same operation to each network terminal **43** is provided on the control terminal **41**. Therefore, the user can use only one power button **62** to turn on or turn off the power of any of the network terminals **43**. Alternatively, a manipulation button with its corresponding icon may be used instead of the power button **62**.

Moreover, the manipulation information is transmitted from the network terminal **43** to the control terminal **41**, so that the manipulation information is analyzed by the control terminal **41**, whereby the user is provided with the manipulation environment. Therefore, even when a new network terminal **43** is connected to the network **42**, a manipulation environment for remotely controlling the new network terminal **43** is automatically established on the control terminal **41**. Furthermore, since the control terminal **41** includes part of manipulation components for each of the manipulation component types in advance, the amount of the manipulation information transmitted from the network terminal **43** is reduced.

According to the first example of the present invention, the television terminal **43-1**, the video terminal **43-2** and the image receiver terminal **43-3** are illustrated as the network terminals **43**. The present invention, however, is applicable to other types of network terminals.

According to the first example of the present invention, a radio infrared network is used as the network **42**. The present invention, however, is equally applicable when a cable network is used.

Furthermore, according to the first example of the present invention, the control terminal **41** performs polling so as to confirm whether or not there is a new network terminal **43**. When there is a new network terminal **43**, the control terminal **41** requests manipulation information to be transmitted from the new network terminal **41**, so as to download the manipulation information of the new network terminal **41**. The present invention, however, is not limited thereto, and the manipulation information may be downloaded according to any kind of method. For example, the manipulation information may be spontaneously transmitted from the network terminal **43** to the control terminal **41** when the power of the network terminal **43** is turned on, or when the network terminal **43** connects to the network **42**.

According to the first example of the present invention, buttons are used as manipulation elements. The present invention, however, is not limited thereto, and is equally applicable when other elements (e.g., speech recognition elements or voice guiding elements) are used for manipulation.

### (Example 2)

Hereinafter, a network control system **1300** including a control terminal **1301** and a network terminal **1303** according to a second example of the present invention will be described.

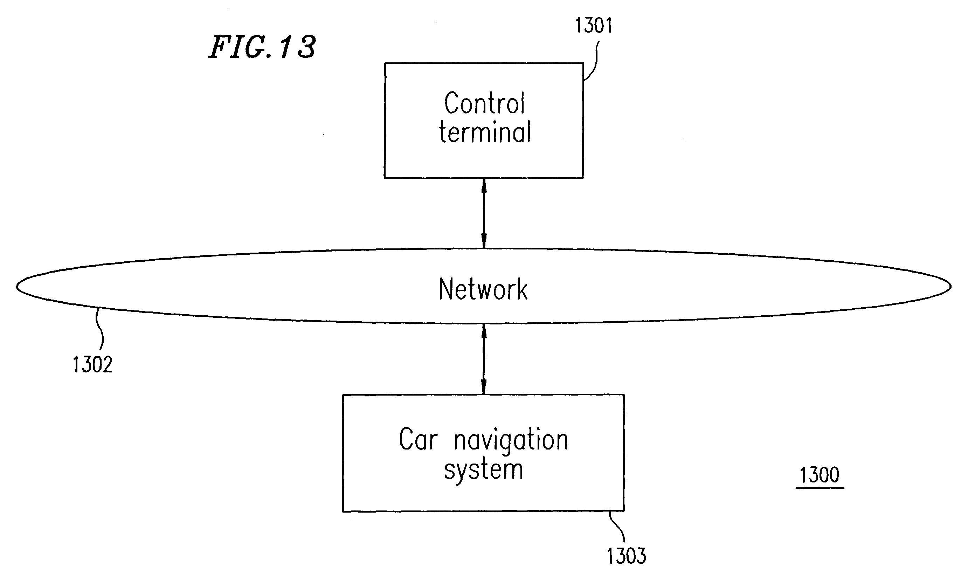

Figure **13** is a schematic diagram showing the network control system **1300** according to the second example of the present invention. The network control system **1300** includes the control terminal **1301**, a network **1302** and a car navigation system as the network terminal **1303**.

According to the second example of the present invention, the network **1302** is a cable network. The control terminal **1301** remotely controls the car navigation system **1303** via the cable network **1302**.

The control terminal **1301** and the car navigation system **1303** function in substantially the same manner as the control terminal **41** and the network terminal **43** shown in Figure **4A**.

The manner of downloading manipulation information, structure of the manipulation information and the manner of transmitting the manipulation requesting signal are basically the same as those according to the first example of the present invention.

Specifically, manipulation information is downloaded from the car navigation system **1303** to the control terminal **1301** so that a manipulation environment for remotely controlling the car navigation system **1303** is established in the control terminal **1301**.

According to the second example, the manipulation information is downloaded when the car navigation system **1303** connects to the network **1302**. In other words, manipulation information is transmitted from the car navigation system **1303** to the control terminal **1301** when the car navigation system **1303** connects to the network **1302** as a new network terminal.

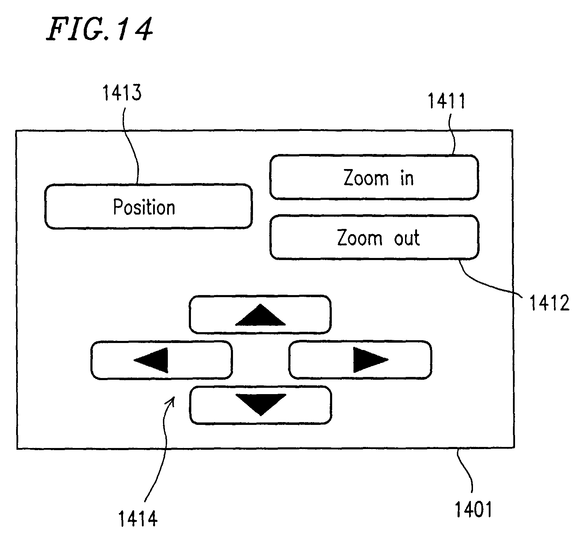

Figure **14** is a plan view showing the manipulation environment for remotely controlling the car navigation system **1303** established on the control terminal **1301.**

A display screen **1401** is displayed on the display panel **64** of the display device **411** of the control terminal **1301**. The display screen **1401** represents the manipulation environment for remotely controlling the car navigation system **1303**, including a "Zoom in" (enlargement) button **1411**, a Zoom out" (contraction) button **1412**, a position button **1413** for displaying the present position and a cross-shaped button **1414** for moving a cursor.

The "Zoom in" button **1411**, the "Zoom out" button **1412**, the "position" button **1413** and the cross-shaped button **1414** (including left, right, up and down buttons) are displayed on the display panel **64** of the display device **411** of the control terminal **1301**. The display panel **64** is a touch panel display. When the user touches one of these manipulation buttons, a manipulation requesting signal corresponding to the touched button is transmitted from the control terminal **1301** to the car navigation system **1303**. In response to this manipulation requesting signal, the car navigation system **1303** performs an operation corresponding to the transmitted manipulation requesting signal.

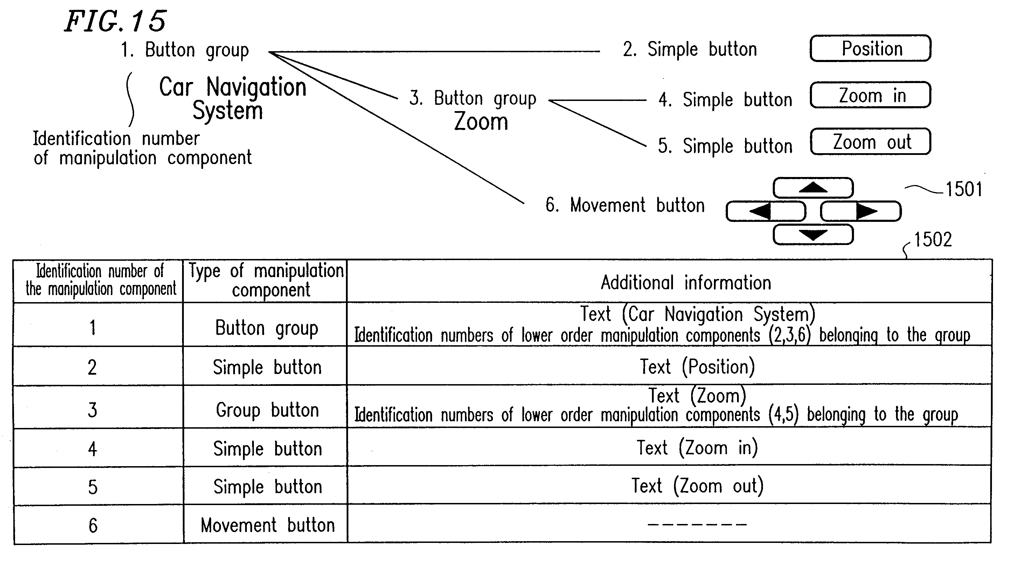

Figure **15** is a diagram showing the manipulation information **1502** for establishing the manipulation environment shown in Figure **14** for remotely controlling the car navigation system **1303** in the network control system **1300** according to the second example of the present invention. Figure **15** further shows the manipulation components **1501** represented by the manipulation information **1502**.

In the manipulation information **1502**, the manipulation component type "Button group" given an identification number **1** is a main button group of the car navigation system **1303**. The "Button group" includes text "Car navigation" as additional information which is used as information for the user to read. The "Button group" further includes, as the additional information, the identification numbers **2**, **3** and **6** corresponding to the lower order manipulation components belonging to the group.

The manipulation component type "Simple button" given the identification number **2** represents the "Position" button **1413** and has text "Position" as additional information.

The manipulation component type "Button group" given the identification number **3** represents the "Zoom in" button **1411** and the "Zoom out" button **1412**, and has text "Zoom" as additional information. The "Button group" further includes identification numbers **4** and **5**.

The manipulation component type "Simple button" given the identification numbers **4** and **5** represent the "Zoom in" button **1411** and the "Zoom out" button **1412**, respectively. Each of the "Simple button" has text "Zoom in" and "Zoom out", respectively.

The manipulation component type "Movement button" given the identification number **6** represents the cross-shaped button **1414**.

The above-described manipulation information **1502** is transmitted from the car navigation system **1303** to the control terminal **1301**. Based on this manipulation information **1502**, the manipulation environment for remotely controlling the car navigation system **1303** is registered in the control terminal **1301**.

According to the second example of the present invention, the cross-shaped button **1414** is not fixedly provided as the cross-shaped button **612** is in the first example of the present invention. Bit map and a position of each of the buttons of the cross-shaped button **1414** are stored in the control terminal **1301**. When the cross-shaped button **1414** is required in the manipulation environment as a result of the analysis of the manipulation information, the cross-shaped button **1414** is displayed on the display panel **64** of the display device **411** based on the bit maps and the positions of the buttons.

The "Zoom in" button **1411**, the "Zoom out" button **1412** belong to one button group. The control terminal **1301** identifies each of the buttons **1411** and **1412** and collectively displays the buttons **1411** and **1412** on the display panel **64** of the display device **411**.

In the conventional network control system **100**, the buttons are displayed without regard to the relationship among the buttons. Therefore, related buttons are not always collectively arranged so as to be close to each other.

According to the second example of the present invention, related buttons are defined as one group. Accordingly, the buttons are collectively arranged so as to be close to each other. Thus, usability of the control terminal **1301** for the user is enhanced since related buttons such as the "Zoom in" button **1411** and the "Zoom out" button **1412** are easy for the user to manipulate when they are displayed close to each other.

Moreover, a plurality of button groups may be defined such that each of the button groups has a display screen assigned thereto. By doing so, the button groups are selectively displayed by switching the display screens on the display panel **64**, thereby enabling a large number of manipulation components to be displayed.

Hereinafter, the above-described display method will be described in detail.

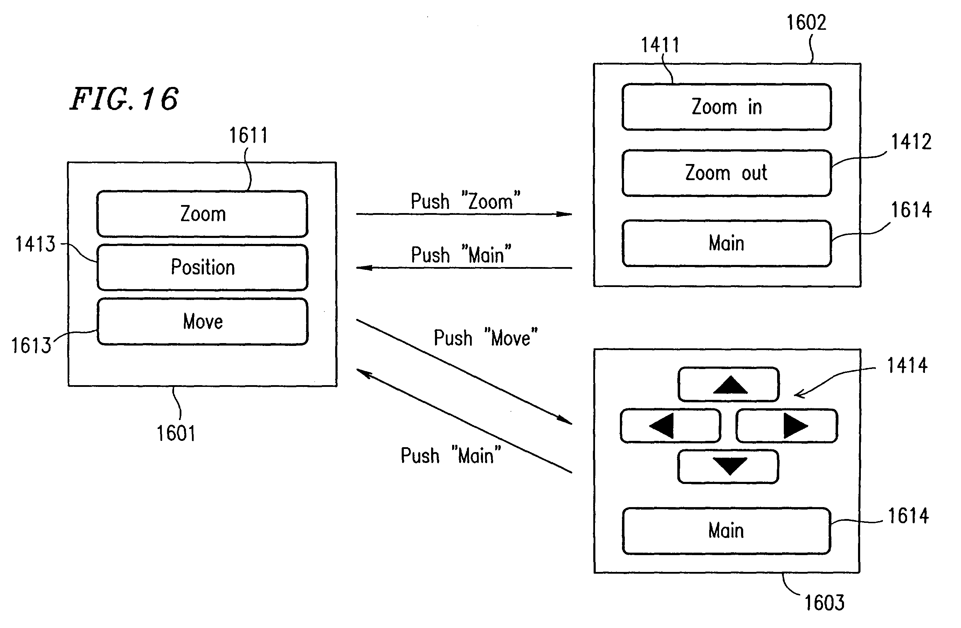

Figure **16** is a plan view showing a plurality of display screens **1601**, **1602** and **1603**. It is assumed that the display panel **64** is so small that the "Zoom in" button **1411**, the "Zoom out" button **1412** and the cross-shaped button **1414** cannot be displayed at once. The "Zoom in" button **1411** and the "Zoom out" button **1412** belong to one button group, and each of the buttons included in the cross-shaped button **1414** belong to the other button group.

The display screen **1601** is the main screen of the manipulation environment for remotely controlling the car navigation system **1303**. In the display screen **1601**, a "Zoom" button **1611**, the "Position" button **1413** and a "Move" button **1613** are displayed. By selectively touching the "Zoom" button **1611** or the "Move" button **1613**, the display screen **1601** switches to the display screen **1602** or **1603**. The "Position" button **1413**, is not used for switching the display screen but is used to directly instruct function corresponding to the "Position" button **1413**.

When the user touches the "Zoom" button **1611** when the main display screen **1601** is displayed on the display screen **64**, the display screen of the display panel **64** changes to the display screen **1602**. The display screen **1602** includes the "Zoom in" button **1411**, the "Zoom out" button **1412** and a "Main" button **1614** for returning to the main display screen **1601**.

When the user touches the "Move" button **1613** when the main display **1601** is displayed on the display panel **64**, the display screen of the display panel **64** changes to the display screen **1603**. The display screen **1603** includes the cross-shaped button **1414** and the "Main" button **1614** for returning to the main display screen **1601**.

According to this method, the buttons are divided into related groups. Therefore, even in the case where the display panel **64** of the control terminal **1301** is so small that the manipulation environment cannot be displayed on the display panel **64** at once, the related buttons included in the same group are displayed on the same display screen. Thus, the user can comfortably use the control terminal **1301**.

In the conventional network control system **100**, such grouping of the manipulation buttons is not conducted. Therefore, the manipulation buttons may be separately displayed on a plurality of display screens, which is uncomfortable for the user to use the manipulation buttons.

Hereinafter, the above-described disadvantage of the conventional network control system **100** will be described.

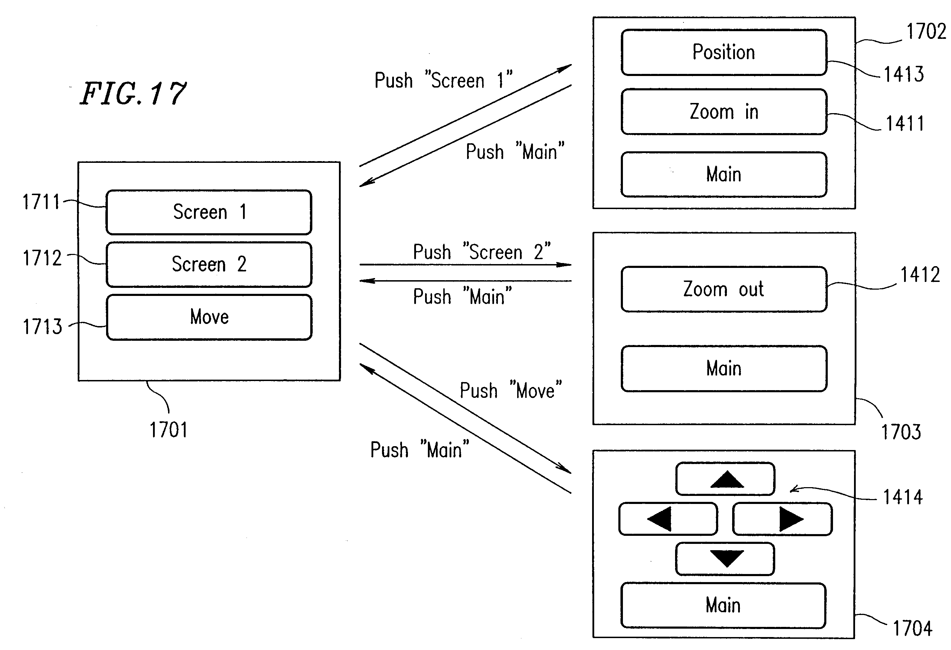

Figure **17** is a plan view showing a plurality of display screens **1701**, **1702** and **1703**. The display screen **1701** is a main screen in which a "Screen 1" button **1711**, a "Screen 2" button **1712** and a "Move" button **1713** are displayed. By selectively touching the "Screen 1" button **1711**, the "Screen 2" button **1712** or the "Move" button **1713**, the display screen is switched among the display screens **1702**, **1703** and **1704**.

As can be appreciated from the display screens **1702**, **1703** and **1704** shown in Figure **17**, the related "Zoom in" and "Zoom out" buttons **1411** and **1412** are displayed separately on the display screens **1702** and **1703**. Therefore, in order to alternately use the "Zoom in" and "Zoom out" buttons **1411** and **1412**, the user should proceed the steps of switching the display screens in the order of "**1701 → 1702** → **1701** → **1703**" or "**1701** → **1703** → **1701 → 1702**", which renders the manipulation complicated.

According to the second example of the present invention, the manipulation information is transmitted from the network terminal, i.e., the car navigation system **1303**, to the control terminal **1301**. The transmitted manipulation information is analyzed by the control terminal **1301**, thereby establishing the manipulation environment for the user. Since related manipulation buttons are grouped into one button group, the related buttons are collectively displayed, thereby enhancing the usability of the control terminal **1301** for the user.

According to the second example of the present invention, a car navigation system is illustrated as the network terminal **1303**. The present invention, however, is not limited thereto and is equally applicable to other network terminals.

Moreover, according to the second example of the present invention, a cable network is used as the network **1302**. The present invention, however, is equally applicable when a radio network is used as the network **1302**.

Furthermore, according to the second example of the present invention, the manipulation information is downloaded from the network terminal **1303** to the control terminal **1301** when the network terminal **1303** connects to the control terminal **1301**. The present invention, however, is not limited thereto, and the manipulation information may be downloaded according to any kind of method.

According to the second example of the present invention, buttons are used as manipulation elements. The present invention, however, is not limited thereto and is equally applicable when other elements (e.g., speech recognition elements or voice guiding elements) are used for manipulation.

### (Example 3)

Hereinafter, a network control system **1800** including a control terminal **1801** and network terminals **1803**, **1804** and **1805** according to a third example of the present invention will be described.

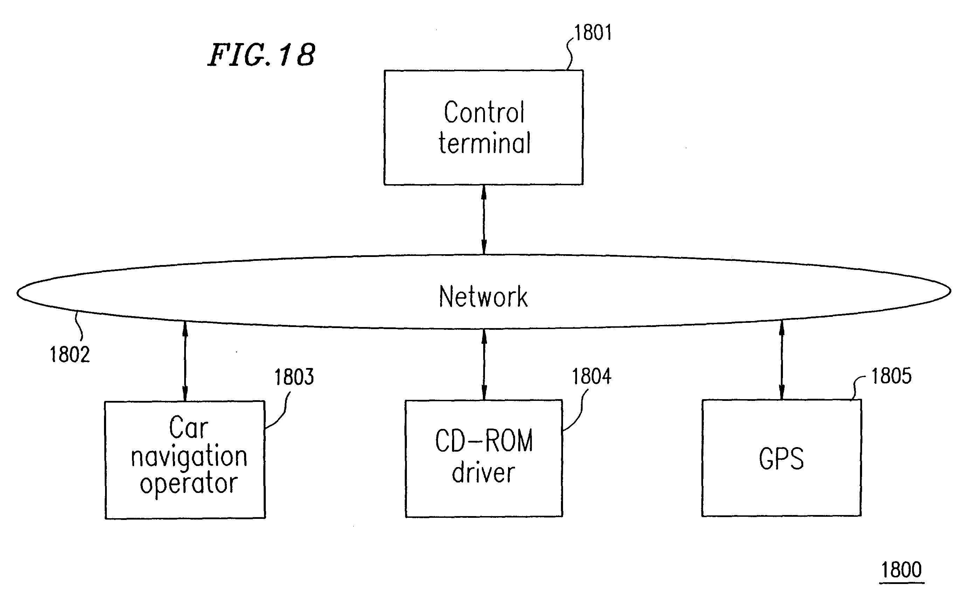

Figure **18** is a block diagram schematically showing the network control system **1800** according to the third example of the present invention. The network control system **1800** includes a control terminal **1801**, a network **1802**, a car navigation operator **1803,** a CD-ROM driver **1804** and a GPS (Global Positioning System) **1805**. According to the third example of the present invention, the car navigation operator **1803**, the CD-ROM driver **1804** and the GPS **1805** are the network terminals.

According to the third example of the present invention, manipulation information is transmitted from the network terminals to the control terminal **1801** in substantially same manner as in the first example of the present invention. The transmitted manipulation information is analyzed by the control terminal **1801**, thereby establishing a manipulation environment for remotely controlling the network terminals **1803**, **1804** and **1805.** The structure of the control terminal **1801**, the structures of the network terminals **1803**, **1804** and **1805**, the types of the manipulation components are substantially the same as those according to the previously described examples of the present invention.

According to the third example of the present invention, an application is not realized only by the car navigation operator **1803**. The application is realized when the network terminals (i.e., the car navigation operator **1803**, the CD-ROM driver **1804** and the GPS **1805**) are combined.

Specifically, the car navigation operator **1803** receives data indicating a map from the CD-ROM driver **1804** via the network **1802** and receives location data from the GPS **1805**, thereby performing an operation.

In the network control system **1800** according to the third example of the present invention, a manipulation environment for remotely controlling the above-described application is automatically established in the control terminal **1801** when the car navigation operator **1803**, the CD-ROM driver **1804** and the GPS **1805** are connected to each other.

One network terminal receives function information from other network terminals via the network **1802**, and identifies what kind of application can be provided when combined with the other network terminals. Then, the identified application is transmitted to the control terminal **1801**. Herein, the term "function information" refers to information indicating a function of each network terminal.

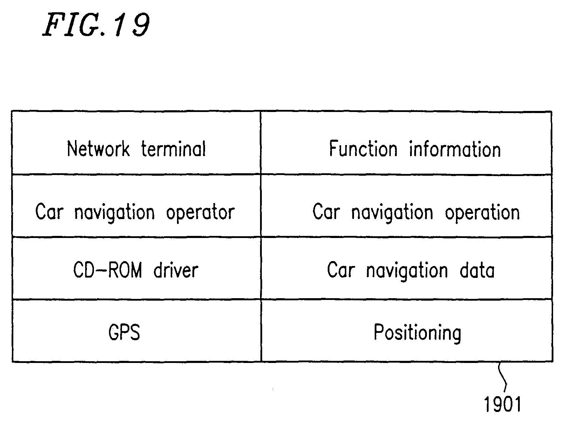

Figure **19** is a table **1901** showing function information which are exchanged among the network terminals **1803**, **1804** and **1805**.

The car navigation operator **1803** transmits function information "car navigation operation". The CD-ROM driver **1804** transmits function information "car navigation data". The GPS **1805** transmits function information "positioning".

The above-mentioned function information is exchanged among the network terminals. Based on the function information from other network terminals, each network terminal determines whether or not its application can be realized.

In order to realize the car navigation application, the car navigation operator **1803** requires a network terminal having a function of "car navigation data" and a network terminal having a function of "positioning". The car navigation operator **1803** receives the function information "car navigation data" from the CD-ROM driver **1804** and receives the function information "positioning" from the GPS **1805**, thereby determining that the car navigation application can be realized.

Hereinafter, the way the car navigation operator **1803** determines that the car navigation application can be realized will be described in detail.

It is assumed that now the control terminal **1801**, the CD-ROM driver **1804** and the GPS **1805** are connected to the network **1802**.

When the car navigation operator **1803** connects to the network **1802**, the car navigation operator **1803** transmits a function information transmission request to each network terminal via the network **1802**. Each network terminal which has received the function information transmission request transmits function information to the car navigation operator **1803**.

Specifically, the CD-ROM driver **1804** transmits the function information "car navigation data" and the GPS **1805** transmits the function information "positioning" to the car navigation operator **1803.** By receiving the above-mentioned function information, the car navigation operator **1803** determines that the car navigation application can be provided.

Once the car navigation operator **1803** determines that the car navigation application can be realized, the car navigation operator **1803** transmits manipulation information to the control terminal **1801**. The control terminal **1801** analyzes the transmitted manipulation information, thereby establishing a manipulation environment for remotely controlling the car navigation system.

A format of the manipulation information, process for establishing the manipulation environment in the control terminal **1801** and the like are substantially the same as those described in the second example of the present invention.

In the above-described exemplary operation, the car navigation operator **1803** is connected to the network **1802** as a new network terminal. When the CD-ROM driver **1804** or the GPS **1805** is connected to the network **1802** as a new network terminal, function information thereof is spontaneously transmitted to the car navigation operator **1803**. Accordingly, the car navigation operator **1803** connected to the network **1802** receives the function information, thereby determining that the car navigation application can be realized.

According to the above-described operation, an application of a new network terminal can be automatically controlled by the control terminal by simply connecting the network terminal to the network.

According to the third example of the present invention, a car navigation system is illustrated. The present invention, however, is not limited thereto, and is applicable to any network control system for providing an application.

### (Example 4)

Hereinafter, a network control system **2000** including a control terminal **2001** and network terminals **2002**, **2004**, **2005** and **2006** according to a fourth example of the present invention will be described.

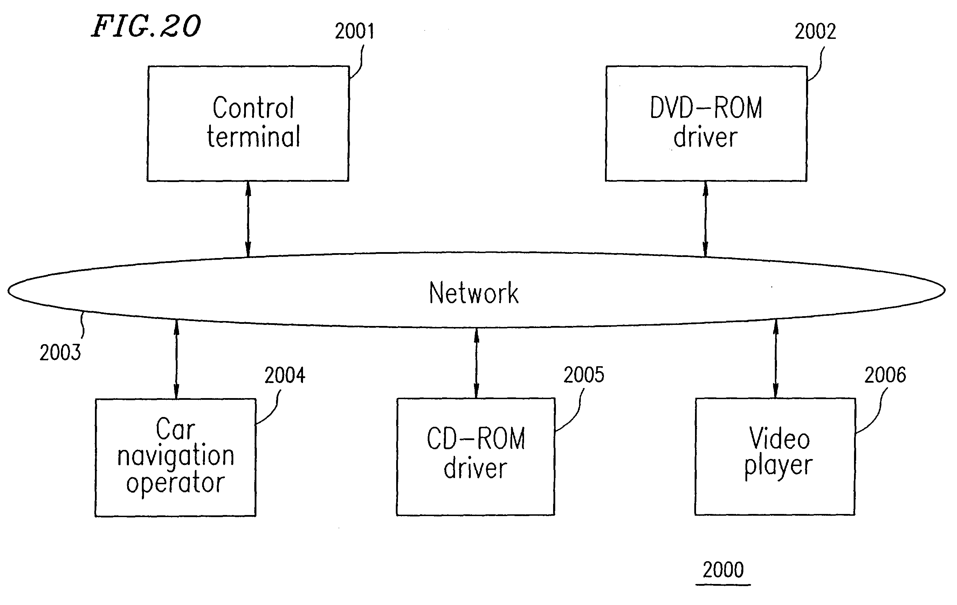

Figure **20** is a block diagram schematically showing the network control system **2000** according to the fourth example of the present invention. The network control system **2000** includes the control terminal **2001**, a DVD-ROM driver **2002**, a network **2003**, a car navigation operator **2004**, a CD-ROM driver **2005** and a video player **2006**.

According to the fourth example of the present invention, in substantially the same manner as in the previously described examples, manipulation information is transmitted from the network terminals to the control terminal **2001** and the control terminal **2001** analyzes the manipulation information, thereby establishing a manipulation environment for remotely controlling the network terminals **2002**, **2004**, **2005** and **2006**. The structure of the control terminal **2001**, the structures of the network terminals **2002**, **2004**, **2005** and **2006** and types of the manipulation components are substantially the same as those described in the previous examples.

According to the fourth example of the present invention, in the same manner as in the third example of the present invention, an application is provided by combining a plurality of network terminals **2002**, **2004**, **2005** and **2006**. Process for exchanging function information among the network terminals **2002**, **2004**, **2005** and **2006**, and determining an application provided by the network terminals and a structure of the function information are substantially the same as those in the third example of the present invention.

According to the fourth example of the present invention, when states of the network terminals **2002**, **2004**, **2005** and **2006** change, an application which can be realized according to network terminals **2002**, **2004**, **2005** and **2006**, dynamically changes as well.

According to the fourth example of the present invention, an application is not realized only by the car navigation operato**r 2004**, but when it cooperates with the CD-ROM driver **2005**. The car navigation operator **2004** receives car navigation data from the CD-ROM driver **2005** only when a disk containing a database of the car navigation system is set in the CD-ROM driver **2005**, whereby an application is realized by the car navigation operator **2004**.

The video player **2006** receives video data from the DVD-ROM driver **2002** or the CD-ROM driver **2005** when a disk containing video data is set in the DVD-ROM driver **2002** or the CD-ROM driver **2005**, thereby realizing an application for playing a video.

Thus, according to the fourth example of the present invention, the application to be realized changes when a disk in the DVD-ROM driver **2002** or the CD-ROM driver **2005** is exchanged.

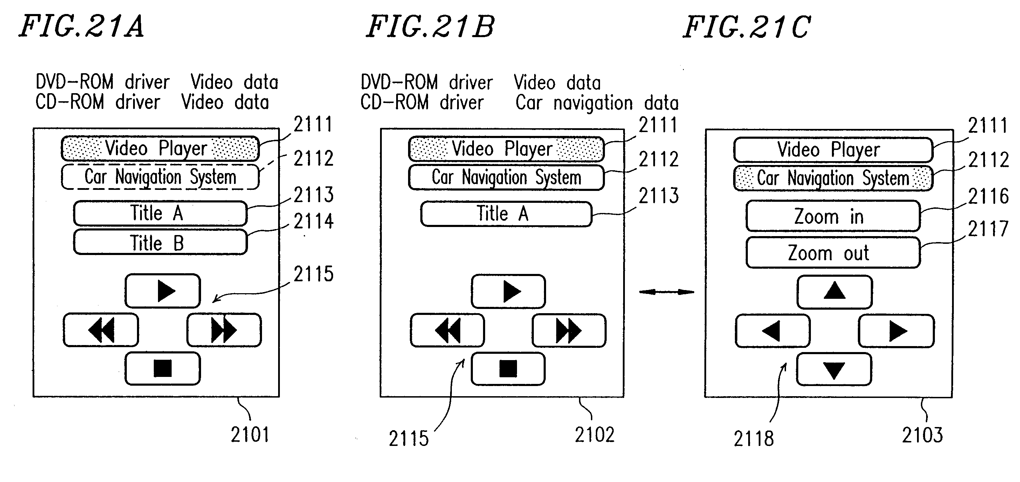

Hereinafter, manipulation environments according to the fourth example of the present invention will be described with reference to Figures **21A**, **21B** and **21C**.

Figures **21A**, **21B** and **21C** are plan views showing display screens **2101**, **2102** and **2103**, respectively, which are displayed on a display panel **64** of a display device **411** of the control terminal **2001**. The display screens **2101** and **2102** are manipulation environments used for remotely controlling the video player **2006**. The display screen **2103** is a manipulation environment used for remotely controlling the car navigation operator **2004**.

The display screen **2101** is used when both of the DVD-ROM driver **2002** and the CD-ROM driver **2005** include video data. A "Video Player" button **2111** and a "Car Navigation System" button **2112** are used for selecting the application. In Figures **21A**, **21B** and **21C**, shaded button corresponds to a presently selected application.

When both of the DVD-ROM driver **2002** and the CD-ROM driver **2005** include video data, the car navigation operator **2004** cannot realize the application of the car navigation system. Therefore, in Figure **21A**, the "Car Navigation System" button **2112** of the display screen **2101** is drawn with a broken line, which indicates that the display screen does not change to the display screen **2103** for remotely controlling the car navigation system even when the "Car Navigation System" button **2112** is selected.

The manipulation environment shown in Figure **21A** for remotely controlling the video player **2006** includes "Title A" and "Title B" buttons **2113** and **2114** for selecting video data, and a group of buttons **2115** including play, rewind, fast forward and stop buttons.

Since the video player **2006** operates by using a database of either one of the DVD-ROM driver **2002** or the CD-ROM driver **2005**, the "Title A" and "Title B" buttons **2113** and **2114** are displayed for selecting the database.

The image screen **2102** and **2103** are the manipulation environments of the control terminal **2001** when the DVD-ROM driver **2002** has video data and CD-ROM driver **2005** has car navigation data. The car navigation operator **2004** operates while using the CD-ROM driver **2005** as a database and the video player **2006** operates while using the DVD-ROM driver **2002** as a database. The display screens **2102** and **2103**, i.e., manipulation environments for remotely controlling the video player **2006** and the car navigation operator **2004**, can be switched therebetween.

In the display screen **2102** which represents the manipulation environment for remotely controlling the video player **2006**, only the DVD-ROM driver **2002** is available as the database of the video player **2006**. Therefore, only the "Title A" button **2113** for selecting the video data in the DVD-ROM driver **2002** is displayed.

In the display screen **2103** which represents the manipulation environment for remotely controlling the car navigation operator **2004**, a "Zoom in" button **2116**, a "Zoom out" button **2117** and a cross-shaped button **2118** are displayed.

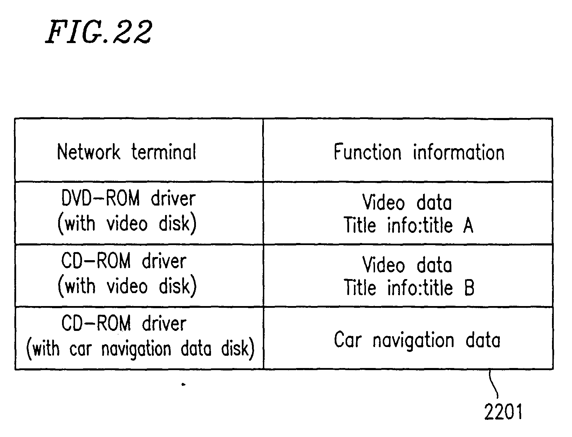

Figure **22** is a table **2201** showing function information exchanged among the network terminals **2002**, **2004**, **2005** and **2006**.

When a video disk is in the DVD-ROM driver **2002**, the DVD-ROM driver **2002** transmits "Video data" as function information. The function information includes text "Title A" which is information of a title of the video data.

When a video data disk is in the CD-ROM driver **2005**, the CD-ROM driver **2005** transmits "Video data" as function information. The function information includes text "Title B" which is information of a title of the video data. Furthermore, when a car navigation data disk is in the CD-ROM driver **2005**, the CD-ROM driver **2005** transmits "Car navigation data" as function information.

The function information of the CD-ROM driver **2005** changes in the above-described manner.

When both of the DVD-ROM driver **2002** and the CD-ROM driver **2005** include video disks, the video player **2006** receives "video data" from both of the DVD-ROM driver **2002** and the CD-ROM driver **2005**. Therefore, the video player **2006** can provide an application for playing video data of "Title A" and "Title B". When video data disk is inserted only in the DVD-ROM driver **2002**, an application for playing video data of title A is provided by receiving function information "video data" from the DVD-ROM driver **2002**.

When there is no car navigation data in the CD-ROM driver **2005**, the car navigation operator **2004** cannot receive function information "car navigation data", thereby being unable to provide car navigation application. When the CD-ROM driver **2005** includes a disk of car navigation data, the car navigation operator **2004** is able to receive function information "car navigation data", thereby providing car navigation application.

Hereinafter, manipulation information which changes according to the function of the network terminal will be described.

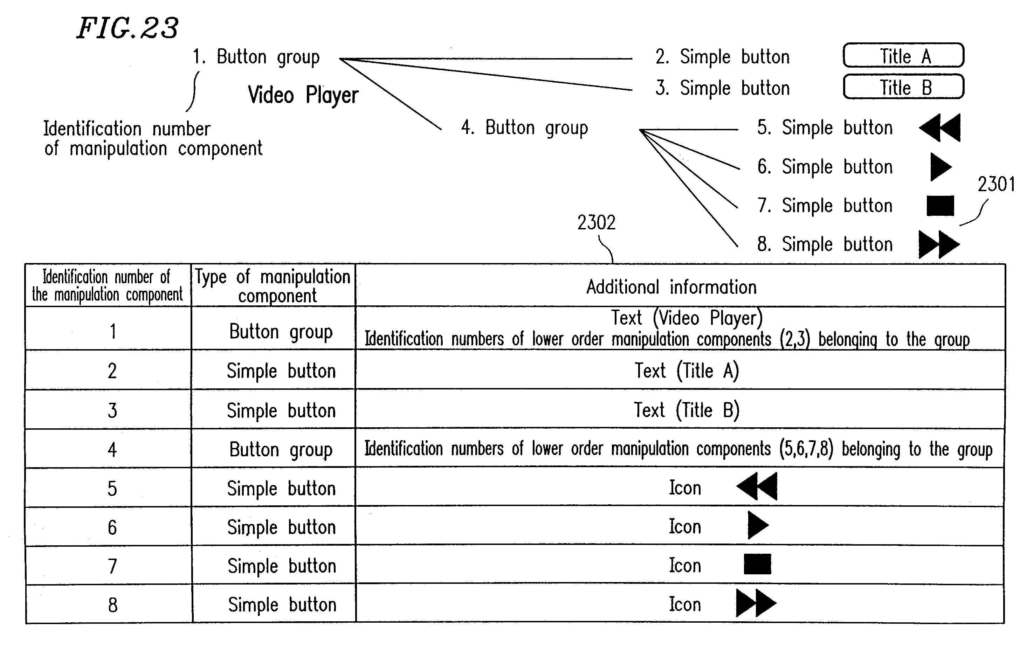

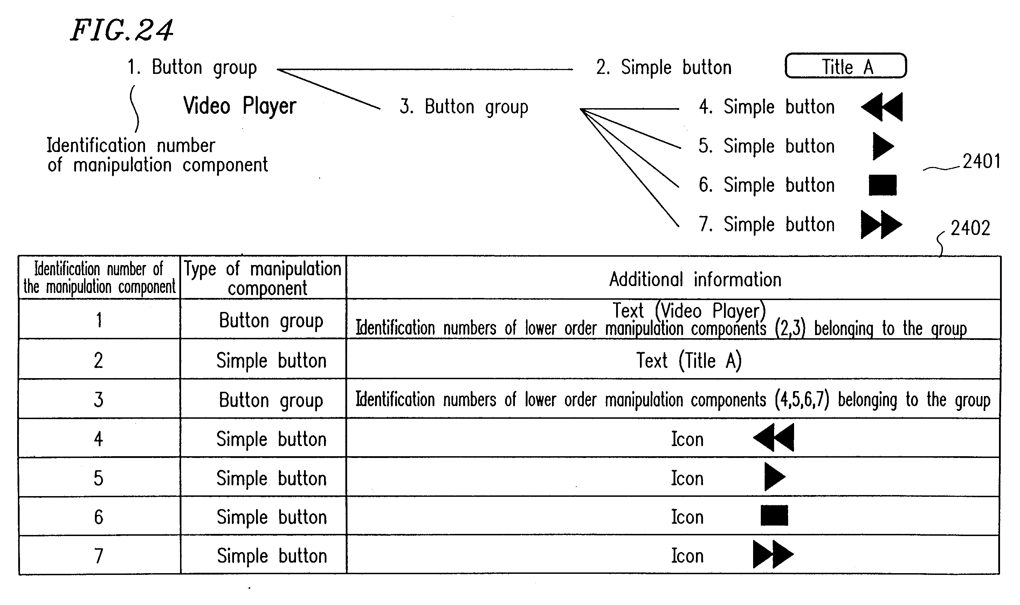

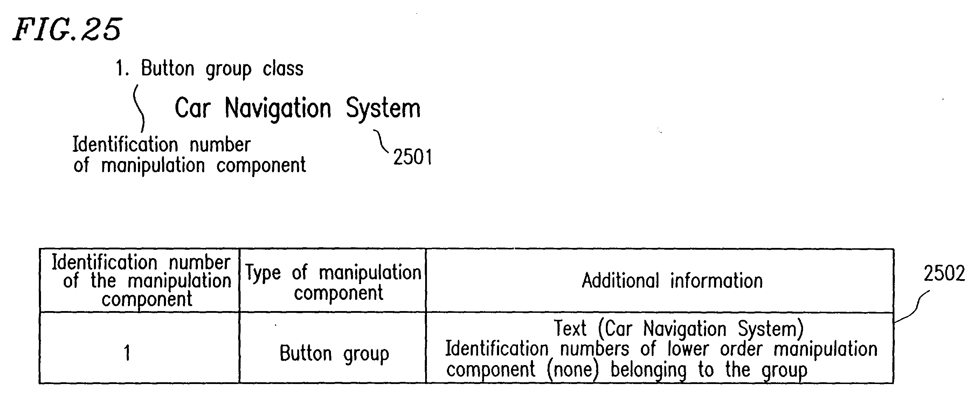

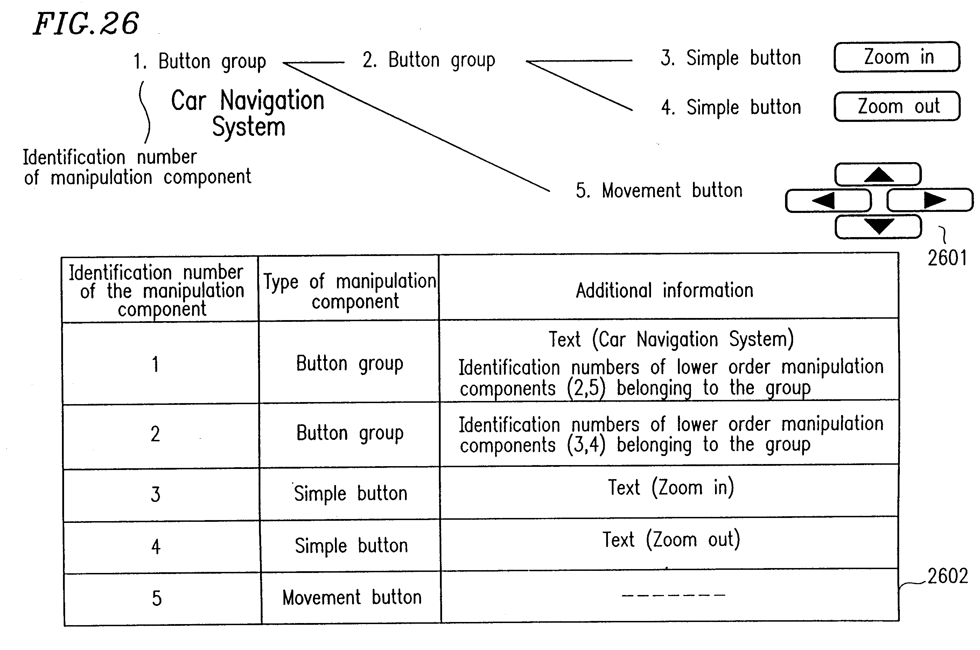

Figures **23** and **24** are diagrams showing manipulation information **2302** and **2402** for establishing manipulation environments shown in Figures **21A** and **21B** for remotely controlling the video player **2006**. Figures **25** and **26** are diagrams showing manipulation information **2502** and **2602** for establishing manipulation environments for remotely controlling the car navigation operator **2004**.

Figures **23**, **24**, **25** and **26** further show manipulation components **2301**, **2401**, **2501** and **2601**, respectively.

A structure of manipulation information of the video player **2006**, a structure of manipulation information of the car navigation operator **2004** and types of the manipulation components are substantially the same as those in the previously described examples.

Each type of manipulation component included in the manipulation information **2302** and **2402** represents a main button group, at least one of the "Title A" button **2113** and the "Title B" button **2114**, the button group (including the rewind, play, stop and fast forward buttons), the rewind button, the play button, the stop button and the fast forward button. Additional information is set so as to correspond to each type of manipulation component. The "Title A" button **2113** and the "Title B" button **2114** are used for selecting a source of the video data.

The manipulation information **2502** representing the manipulation environment for remotely controlling the car navigation operator **2004** shown in Figure **25** includes only a main button group, and does not represent other buttons or the like.

The manipulation information **2602** representing the manipulation environment for remotely controlling the car navigation operator **2004** shown in Figure **26** includes manipulation components representing a main button group, a button group including the "Zoom in" button **2116** and the "Zoom out" button **2117** and the cross-shaped button **2118**.

When video data disks are set in both of the DVD-ROM driver **2002** and the CD-ROM driver **2005**, the video player **2006** transmits manipulation information **2302** to the control terminal **2001** based on the function information from the DVD-ROM driver **2002** and the CD-ROM driver **2005**. The manipulation information **2302** includes, as shown in Figure **23**, the "Title A" button **2113** indicating the title of the video data in the DVD-ROM driver **2002** and the "Title B" button **2114** indicating the title of the video data in the CD-ROM driver **2005**. The video player **2006** uses text of titles included in the function information of the DVD-ROM driver **2002** and the CD-ROM driver **2005**.

Furthermore, when a video data disk is set in the DVD-ROM driver **2002** and no video data disk is set in the CD-ROM driver **2005**, the video player **2006** transmits manipulation information **2402** to the control terminal **2001** based on the function information from the DVD-ROM driver **2002** and the CD-ROM driver **2005**. The manipulation information **2402** includes, as shown in Figure **24**, the "Title A" button **2113** indicating the title of the video data in the DVD-ROM driver **2002**.

When video data disks are set in neither of the DVD-ROM driver **2002** and the CD-ROM driver **2005**, titles A and B are not included in the manipulation information.

When no car navigation data disk is set in the CD-ROM driver **2005** such that function information "car navigation data" cannot be received, the manipulation information of the car navigation operator **2004** only includes the main group of the car navigation.

When a car navigation data disk is set in the CD-ROM driver **2005** such that function information "car navigation data" can be received from the CD-ROM driver **2005**, the manipulation information **2602** is provided to the control terminal **2001**. The manipulation information **2602** includes, as shown in Figure **26**, the "Zoom in" button **2116**, the "Zoom out" button **2117** and the cross-shaped button **2118**.

According to the fourth example of the present invention, the network terminals **2005** and **2006** determine whether or not the application thereof can be realized based on function information transmitted from other network terminals. The network terminals then generate manipulation information corresponding to the determined application and provide the manipulation information thereof to the control terminal **2001**.

Hereinafter, a process of changing the manipulation environment of the control terminal **2001** by changing the manipulation information transmitted from the network terminals **2005** and **2006** will be described.

Now both of the DVD-ROM driver **2002** and the CD-ROM driver **2005** include video data disks.

When video data disks are inserted in both of the DVD-ROM driver **2002** and the CD-ROM driver **2005**, the video player **2006** receives function information "video data" from both of the DVD-ROM driver **2002** and the CD-ROM driver **2005**, thereby determining that the application of the video player can be realized. Accordingly, the video player **2006** transmits the manipulation information **2302** to the control terminal **2001**. The car navigation operator **2004** does not receive function information "car navigation data", and therefore determines that the application for car navigation system cannot be realized. Accordingly, the car navigation operator **2004** transmits the manipulation information **2502** shown in Figure **25** in which no actual manipulation component is included, to the control terminal **2001**. As a result, the control terminal **2001** recognizes the presence of the car navigation operator **2004** but determines that the application of the car navigation system cannot be provided.

The control terminal **2001** receives the manipulation information **2302** from the video player **2006** and the manipulation information **2502** from the car navigation operator **2004**, and establishes the manipulation environment represented by display screen **2101** shown in Figure **21A.**

Now the video data disk in the CD-ROM driver **2005** is replaced with a car navigation data disk.

When the car navigation data disk is inserted in the CD-ROM driver **2005**, function information "car navigation data" is transmitted from the CD-ROM driver **2005** to the car navigation operator **2004** and the video player **2006**.

Based on the function information, the car navigation operator **2004** determines that the application of the car navigation system can be realized, and transmits the manipulation information **2602** shown in Figure **26** to the control terminal **2001**. Based on the manipulation information **2602**, the control terminal **2001** confirms that the manipulation environment for remotely controlling the car navigation system can be realized.

Based on the function information from the CD-ROM driver **2005**, the video player **2006** determines that video data is no longer supplied from the CD-ROM driver **2005**, and transmits the manipulation information **2402** shown in Figure **24** where the "Title B" button is omitted to the control terminal **2201**. Based on the manipulation information **2402**, the control terminal **2001** determines that the "Title B" button is omitted.

As a result, the control terminal **2001** re-establishes the manipulation environment **2102** (Figure **21B**) instead of the manipulation environment **2101**.

Analysis of the manipulation information by a CPU of the control terminal **2001**, and establishment of the manipulation environments are substantially the same as those in the previously described examples.

Operations performed when buttons are selectively manipulated are substantially the same as those in the previously described examples.

According to the fourth example of the present invention, after a manipulation requesting signal is transmitted from the control terminal **2001** to the network terminal **2005** and **2006** providing the application, a command instructing an operation needs to be transmitted from the network terminal **2005** and **2006** to other network terminals.

For example, in the display screen **2101** (Figure **21A**), when the user selects the "Title A" button **2113**, a manipulation requesting signal including an identification number **5** indicating the "Title A" button **2113** is transmitted from the control terminal **2001** to the video player **2006**. In response to this manipulation requesting signal, the video player **2006** reproduces a title corresponding to "Title A". Specifically, the video player **2006** transmits a video data transmission request to the DVD-ROM driver **2002** in which the video data of title A is set. In response to this request, the DVD-ROM driver **2002** transmits the video data to the video player **2006**. The video player **2006** receives the video data and reproduces the video data.

Various commands are set in the network terminals in advance, and are transmitted and received in known steps.

As described above, according to the fourth example of the present invention, the application is realized with a plurality of network terminals, and a manipulation environment corresponding to the application is established. In response to the change in the network terminals, function information is transmitted and received among the network terminals so as to change the application. By transmitting manipulation information corresponding to the application to the control terminal, the manipulation environment in the control terminal is changed as well.

According to the fourth example of the present invention, the car navigation operator and video player are illustrated as the network terminals. The present invention, however, is not limited thereto, and is applicable when an application is provided by other types of network terminals.

Furthermore, according to the fourth example of the present invention, buttons are used as manipulation elements. The present invention, however, is not limited thereto, and is equally applicable when other elements (e.g., speech recognition elements or voice guiding elements) are used for manipulation.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A network control system, comprising:
a network terminal; and
a control terminal, wherein
the network terminal transmits to the control terminal manipulation information indicating a type of at least one manipulation component and a manipulation requesting signal corresponding to the manipulation component, receives from the control terminal the manipulation requesting signal, and performs an operation corresponding to the manipulation requesting signal upon receipt of the manipulation requesting signal from the control terminal; and
the control terminal includes at least one manipulation component, receives and analyzes the manipulation information from the network terminal, selects the type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal.

2. A network control system according to claim 1, wherein a predetermined manipulation component of the at least one manipulation component predeterminedly corresponds to a predetermined operation of the network terminal.

3. A network control system according to claim 1, wherein the at least one manipulation component comprises a physical manipulation button of the control terminal.

4. A network control system according to claim 1, wherein the at least one manipulation component comprises a manipulation button displayed on a display section of the control terminal.

5. A network control system according to claim 1, wherein the at least one manipulation component comprises manipulation components belonging to a manipulation component group, and the control terminal collectively processes the manipulation component of the manipulation component group.

6. A network control system according to claim 1, comprising a plurality of network terminals, at least one of which identifies an application which can be realized by exchanging function information among the plurality of network terminals; transmits to the control terminal manipulation information indicating a type of at least one manipulation component for controlling the function and a manipulation requesting signal corresponding to the manipulation component, receives the manipulation requesting signal from the control terminal, and performs an operation corresponding to the manipulation requesting signal upon receipt of the manipulation requesting signal from the control terminal.

7. A network control system according to claim 1, wherein the control terminal is a remote controller for remotely controlling the network terminal.

8. A network terminal which is controlled by a control terminal including at least one manipulation component, wherein, the network terminal transmits to the control terminal manipulation information indicating a type of at least one manipulation component and a manipulation requesting signal corresponding to the manipulation component, receives manipulation requesting signal, and performs an operation corresponding to the manipulation requesting signal upon receipt of the manipulation requesting signal from the control terminal.

9. A network terminal according to claim 8, wherein a predetermined manipulation component of the at least one manipulation component of the control terminal predeterminedly corresponds to a predetermined operation of the network terminal.

10. A network terminal according to claim 8, wherein the at least one manipulation component comprises a manipulation components belonging to a manipulation component group, and the control terminal collectively processes the manipulation component of the manipulation component group.

11. A network terminal according to claim 8, wherein:
the network terminal identifies an application which can be realized by exchanging function information among a plurality of network terminals, transmits to the control terminal manipulation information indicating a type of at least one manipulation component for controlling the function and a manipulation requesting signal corresponding to the manipulation component, and performs an operation corresponding to the manipulation requesting signal upon receipt of the manipulation requesting signal from the control terminal.

12. A network terminal which is controlled by a control terminal including at least one manipulation component, comprising:
a memory section for storing manipulation information indicating a type of the at least one manipulation component and a manipulation requesting signal corresponding to the manipulation component;
a two-way communication section for transmitting to the control terminal the manipulation information stored in the memory section, and receiving the manipulation requesting signal from the control terminal; and
a control section for performing an operation corresponding to the manipulation requesting signal in response to the manipulation requesting signal received by the two-way communication section.

13. A control terminal for controlling a network terminal which performs an operation in response to a manipulation requesting signal, wherein the control terminal including at least one manipulation component receives and analyzes manipulation information from the network terminal and selects a type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal.

14. A control terminal according to claim 13, wherein a predetermined manipulation component of the at least one manipulation component predeterminedly corresponds to a predetermined operation of the network terminal.

15. A control terminal according to claim 13, wherein the at least one manipulation component comprises a physical manipulation button of the control terminal.

16. A control terminal according to claim 13, wherein the at least one manipulation component comprises a manipulation button displayed on a display section of the control terminal.

17. A control terminal according to claim 13, wherein the at least one manipulation component comprises manipulation components belonging to a manipulation component group, and the control terminal collectively processes the manipulation component of the manipulation component group.

18. A control terminal according to claim 13, wherein the control terminal is a remote controller for remotely controlling the network terminal.

19. A control terminal for controlling a network terminal which performs an operation in response to a manipulation requesting signal, comprising:
at least one manipulation component;
a two-way communication section for receiving manipulation information from the network terminal and transmitting a manipulation requesting signal to the network terminal; and
a control section which analyzes the manipulation information received via the two-way communication system, selects a type of the manipulation component indicated by the manipulation information, corresponds the selected manipulation component and the manipulation requesting signal indicated by the manipulation information, thereby establishing a manipulation environment for controlling the network terminal, and, when the manipulation component is selectively manipulated, transmits the manipulation requesting signal to the network terminal via the two-way communication section.

20. A network control system, comprising:
a plurality of network terminals, at least one of which identifies an application which can be realized by exchanging function information among the plurality of network terminals, transmits to the control terminal manipulation information indicating a manipulation environment for controlling the function and a manipulation requesting signal corresponding to the manipulation component, receives the manipulation requesting signal from the control terminal, and performs an operation corresponding to the manipulation requesting signal upon receipt of the manipulation requesting signal from the control terminal; and
a control terminal which receives and analyzes the manipulation information, establishes the manipulation environment indicated by the manipulation information, and when the manipulation environment is manipulated intended for the function, transmits the manipulation requesting signal to at least one of the network terminals.

21. A plurality of network terminals which are controlled by a control terminal including at least one manipulation component, wherein at least one of the plurality of network terminals identifies an application which can be realized by exchanging function information among the plurality of network terminals, and transmits to the control terminal manipulation information indicating a manipulation environment for controlling the function and a manipulation requesting signal, and performs an operation corresponding to the function upon receipt of the manipulation requesting signal from the control terminal.
